# EUROPÄISCHE PATENTANMELDUNG

(11) **EP 3 502 147 A1**
(43) Veröffentlichungstag der Anmeldung: **26.06.2019**
(21) Anmeldenummer: 17210179.2
(22) Anmeldetag: 22.12.2017
(51) Int. Cl.: C08F 2/02, C08F 2/48, C08F 220/18, C08F 220/30, G02B 1/04

(54) **ZUSAMMENSETZUNG FÜR OPHTHALMOLOGISCHE PRODUKTE**

(71) Anmelder: Merck Patent GmbH, 64293 Darmstadt (DE)
(72) Erfinder: Dobelmann-Mara, Lars, 64846 Gross-Zimmern (DE); Helmstetter, Simon, 63329 Egelsbach (DE); Riedmueller, Stefan, 60488 Frankfurt am Main (DE); Schraub, Martin, 64665 Alsbach-Haehnlein (DE)

(57) **Zusammenfassung**

Die vorliegende Erfindung betrifft eine Zusammensetzung für ophthalmologische Produkte, ensprechende Copolymere und deren Herstellung sowie deren Verwendung zur Herstellung von opthalmischen Linsen oder ophthalmologischen Implantaten sowie diese Produkte.

## Beschreibung

### Technisches Gebiet

Die vorliegende Erfindung betrifft eine Zusammensetzung für ophthalmologische Produkte, ensprechende Copolymere und deren Herstellung sowie deren Verwendung zur Herstellung von opthalmischen Linsen oder ophthalmologischen Implantaten sowie diese Produkte.

### Stand der Technik

Die Katarakt bezeichnet eine Trübung der Augenlinse, die zu einem langsamen, schmerzlosen Verlust der Sehschärfe führt, insbesondere, wenn sich die beginnende Trübung im zentralen Bereich der Linse befindet. Die Betroffenen nehmen ihre Umwelt "wie durch Nebel" wahr. Die getrübte Linse kann in den meisten Fällen operativ durch ein künstliches Linsenimplantat ersetzt werden, so genannte Intraokularlinsen (IOL).

Es ist eine Vielzahl von Intraokularlinsen bekannt. Aufgebaut ist eine Intraokularlinse beispielsweise aus einer zentralen optischen Linse und der peripher anschließenden Haptik, die die optische Linse im Auge fixiert. Die Haptik kann verschiedene Formen aufweisen, besipielsweise C-Haptiken oder Plattenhaptiken. Anhand des Materials können die Linsen in harte IOL und weiche, faltbare IOL unterteilt werden. Die harten Linsen bestehen aus Polymethylmethacrylat. Faltbare Linsen bestehen aus Acrylaten, Siloxanen oder Hydrogelen. Der Vorteil der faltbaren Linsen besteht im wesentlich kleineren Einschnitt, der für die Implantation nötig ist. Eine neue Form der Intraokularlinse ist die Licht-adjustierbare Linse (LAL). Bei der LAL kann nach der Operation durch eine Bestrahlung mit UV-Licht die Bechkraft nachjustiert werden.

Eine Phake Intraokularlinse (PIOL) ist eine künstliche Linse, die zusätzlich zu der körpereigenen Linse in das Auge implantiert wird. Phake Intraokularlinsen können im Rahmen der Korrektur einer Fehlsichtigkeit implantiert werden. Aufgebaut ist eine PIOL aus der zentralen optischen Linse und der peripher anschließenden Haptik, die die optische Linse im Auge fixiert. Durch die Lokalisation der PIOL im Auge wird zwischen Vorderkammer- und Hinterkammerlinsen unterschieden. Die Vorderkammerlinse wird zwischen Hornhaut und Iris implantiert, die Hinterkammerlinse zwischen Iris und Augenlinse. Vorderkammerlinsen bestehen entweder aus hartem Polymethylmethacrylat oder weichen Materialien wie Silikon- oder Acryl-Verbindungen. Hinterkammerlinsen werden in der Regel aus weichen Materialien hergestellt.

Eine licht-adjustierbare Linse kann beispielsweise aus Siloxanen bestehen, die Reste enthalten, welche im UV-Bereich photochemisch aktiv sind. Wird die LAL mit UV-Licht bestrahlt, verändern die Polymere Ihre Struktur. Die erste licht-adjustierbare Linse wurde 1999 von dem amerikanischen Augenarzt Dr. Daniel Schwarz und Robert Grubbs entwickelt (Daniel M. Schwartz et al, Light-adjustable lens: development of in vitro nomograms; in Transactions of the American Ophthalmological Society Bd 102, Dezember 2004, 67-74.)

Die Entwicklung von geeigneten Materialien für IOLs ist rapide forangeschritten. In US 8,247,511 wird beispielsweise die Herstellung einer Intraokularlinse beschrieben, in dem eine starres Copolymer aus einem ersten Monomer, gewählt aus der Gruppe von Ethyleneglycolphenyletheracrylat (EGPEA) und Poyethylenglycolphenylether acrylat [(poly-EG)PEA], einem zweiten Monomer aus der Gruppe der unsubstituierten oder substituierten Styrole und einem dritten Monomer enthaltend eine ethylenisch ungesättigte Gruppe, welches als Homopolymer ein Hydrogel bilden würde, hergestellt wird, eine starre Intraokularlinse geformt wird und diese durch Hydratisierung in eine faltbare Intraokularlinse umgewandelt wird, wobei die Linse einen Brechungsindex von ca. 1,50 hat.

Künstliche Intraokularlinsen, welche aus einem Polymermaterial gebildet werden, welches photochemisch aktivierbare Gruppen enthält, so dass eine photoinduzierte Veränderung der optischen Eigenschaften der künstlichen Intraokularlinse durchgeführt werden kann, sind beispielsweise aus EP 1926454 bekannt.

In M. Schraub et al, European Polymer Journal 51 (2014) 21-27 wird beispielsweise die Photochemie von 3-Phenyl-coumarin enthaltenden Polymethacrylaten beschrieben.

In WO 2017/032442, WO 2017/032444 und WO 2017/032443 werden Materialen für die Herstellung von Medizinprodukten, bevorzugt ophthalmologischen Produkten, besonders bevorzugt für die Herstellung von Intraokularlinsen beschrieben. Diese Materialien können bevorzugt als photoaktive Monomere bei der Herstellung von geeigneten Polymeren oder Copolymeren der Produkte verwendet werden.

Sowohl hydrophobe, weiche Acrylatpolymere als auch Siloxanpolymere, die für die Verwendung zur Herstellung von Intraokularlilnsen bekannt sind, weisen Glistening auf. Hierbei ist die Neigung zu Glistening in erstgenannten Polymeren ausgeprägter. Glistening ist nach Miyata A und Yaguchi S, J Cataract Refract Surg 2004; 30:1768-1772 ein Phasentrennungsphänomen, das bei Temperaturschwankungen auftritt, sobald sich das Polymer in einer wässrigen Umgebung befindet, wie es im menschlichen Auge der Fall ist. Der Wassergehalt des Polymers steigt mit der Temperatur. Bei einem Temperatursturz sinkt die Wasseraufnahmekapazität des Polymers, wodurch es zur Phasentrennung kommt. Die Polymerphase hat hierbei einen anderen Brechungsindex als die Wasserphase, wodurch die Wasserphase in Form von Vakuolen als Glistening wahrgenommen wird. Der Grad des Glistenings ist hierbei von der Temperaturabhängigkeit des Wassergehalts des Polymers abhängig. Je größer die Temperaturanhängigkeit, desto schwerer das Glistening.

Der Wassergehalt eines Polymers lässt sich durch Hinzufügen einer hydrophilen Komponente bei der Polymerisation erhöhen. Eine hydrophile Komponente ist ein Monomer, dessen unvernetztes Homopolymer wasserlöslich oder in Wasser quellbar ist. Ein vernetztes Copolymer, das eine hydrophile Komponente enthält, kann beispielsweise ein Hydrogel sein. Solche Hydrogele bilden eine weitere Klasse von ophthalmologischen Materialien, nämlich hydrophile Acrylatpolymere. Diese sind im trockenen Zustand steif und werden nach Quellung in Wasser weich, wie beispielsweise aus US 8,247,511 und Bozukova D et al, Mat. Sci. Eng. 2010, 69:63-83 bekannt.
Der Wassergehalt solcher Polymer ist größer als 10 %, allerdings ist dieser Wert von arbiträrer Natur.

Im Gegensatz zu hydrophoben Acrylatpolymeren zeigen Hydrogele kein Glistening, jedoch tritt bei diesen Calcifizierung auf, wie in Trivedi et al, Eye 2002, 16: 217-241 beschrieben. Bei einer Calcifizierung handelt es sich um Calciumverbindungen, die sich vor allem an der Linsenoberfläche ablagern und die Sicht trüben.

Folglich gibt es zwei Phänomene, nämlich Glistening und Calcifizierung, die unerwünscht sind und bei einer zu niedrigen beziehungsweise zu hohen Hydrophilie des polymeren Materials auftreten.

Aufgabe der vorliegenden Erfindung ist die Bereitstellung eines geeigneten polymeren Materials enthaltend spezielle photoaktive polymerisierte Monomere, welches bei einer Umgebungstemperatur zwischen 16°C und 18°C weich und formbar ist und wenig Glistening bzw. kein Glistening aufweist und gleichzeitig hydrophob genug ist, damit keine Calcifizierung stattfinden kann, sowie die entsprechende Zusammensetzung, die zur Herstellung dieses Materials geeignet ist. Das polymere Material ist zusätzlich transparent und ändert bei Einstrahlung von UV-Licht einer entsprechenden Wellenlänge λ seinen Brechungsindex, beispielsweise bei Nutzung einer UV-Lichtquelle der entsprechenden Wellenlänge λ oder bei Nutzung eines Lasers mit ausreichend hoher Pulsfrequenz, dessen emittiertes Licht die Wellenlänge 2 λ besitzt.

Die speziellen photoaktiven Monomere sind beispielsweise aus WO 2017/032442 bekannt.

Die Aufgabe wird entsprechend durch die unabhängigen und abhängigen Ansprüche der vorliegenden Patentanmeldung gelöst.

### Zusammenfassung der Erfindung

Es wurde gefunden, dass bei geeigneter Auswahl an Monomeren in einer Zusammensetzung enthaltend spezielle photoaktive Monomere dieses zur Herstellung eines vernetzten transparenten Copolymers führt, das, durch Einstrahlung von UV-Licht der entsprechenden Wellenlänge, seinen Brechungsindex ändert, kaum oder kein Glistening aufweist und welches ohne weitere Hydratisierung bei einer Umgebungstemperatur zwischen 16°C und 18°C weich ist, um beispielsweise in Form einer Intraokularlinse mittels gängiger Applikatoren nach dem Stand der Technik in ein Auge implantiert werden zu können. Vorzugsweise weist das Material kein Glistening auf. Der Begriff "kaum oder kein Glistening" bedeutet, dass das Copolymer stets klar ist und die Vakuolenzahl nach dem Glistening-Test, wie hier beschrieben, unter 50 Vakuolen/mm³, bevorzugt unter 25 Vakuolen/mm³ ist, besonders bevorzugt unter 10 Vakuolen/mm³ ist und ganz besonders bevorzugt unter 5 Vakuolen/mm³ ist, diese Werte entsprechen der Skala 0, die von Akira Miyata eingeführt wurde. Miyata et al, Jpn J Ophthalmol 2001, 45, 564 - 569 beschreiben die Skala 0 mit unter 50 Vakuolen/mm³, die Grenze der Skala 1 mit 50 Vakuolen/mm³, die Grenze der Skala 2 mit 100 Vakuolen/mm³ und die Grenze der Skala 3 mit 200 Vakuolen/mm³.

Ein erster Gegenstand der Erfindung ist daher eine Zusammensetzung enthaltend spezielle photoaktive Monomere der Formel (1), wie nachfolgend beschrieben, mindestens ein hydrophiles Monomer, dessen unvernetztes Homopolymer wasserlöslich oder in Wasser quellbar ist, einen UV-Absorber und einen Quervernetzer, wobei das molare Verhältnis der Summe aller Verbindungen der Formel (1) zur Summe aller hydrophilen Monomere 1:0,51 bis 1:1,24 ist.
Ein weiterer Gegenstand der Erfindung ist die Verwendung der Zusammensetzung zur Herstellung eines entsprechenden Copolymers bzw. zur Herstellung eines Rohlings für eine ophthalmische Linse oder ein ophthalmologisches Implantat.

Ein weiterer Gegenstand der Erfindung ist das entsprechend vernetzte Copolymer enthaltend eine polymerisierte Zusammensetzung, wie zuvor beschrieben, ein Verfahren zur Herstellung eines derartigen Copolymers und dessen Verwendung zur Herstellung eines Artikels, vorzugsweise eines Rohlings für eine ophthalmische Linse, eines Rohlings für ein ophthalmologisches Implantat, eine ophthalmische Linse oder ein ophthalmologisches Implantat.

Ein weiterer Gegenstand der Erfindung ist der entsprechende Artikel sowie das Verfahren zur Herstellung des Artikels.

### Beschreibung der Erfindung

Der erste Gegenstand der Erfindung ist daher eine Zusammensetzung enthaltend mindestens eine Verbindung der Formel (1) 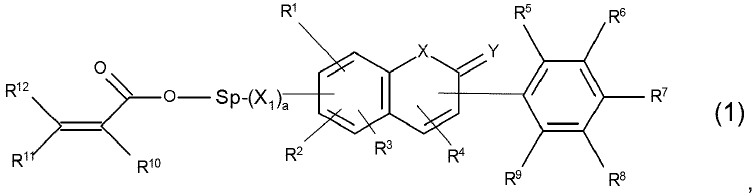 wobei für die verwendeten Symbole und Indizes gilt:
- X: ist bei jedem Auftreten gleich oder verschieden O, S oder NR⁰;
- Y: ist bei jedem Auftreten gleich oder verschieden O oder S;
- X₁: ist O oder S;
- a: ist 0 oder 1;
- Sp: ist ein Alkandiyl, Alkendiyl oder ein Alkindiyl, das mit einem oder mehreren Gruppen R substituiert sein kann;
- R⁰: ist eine geradkettige oder verzweigte Alkylgruppe mit 1 bis 10 C-Atomen;
- R¹, R², R³ und R⁴: sind jeweils unabhängig voneinander bei jedem Auftreten H, F, Cl, Br, I, eine geradkettige oder verzweigte Alkylgruppe mit 1 bis 20 C-Atomen, eine teilweise oder vollständig halogenierte geradkettige oder verzweige Alkylgruppe mit 1 bis 20 C-Atomen oder eine Aryl- oder Heteroarylgruppe mit 5 bis 40 Ringatomen;
- R⁵, R⁶, R⁷, R⁸ und R⁹: sind jeweils unabhängig voneinander bei jedem Auftreten H, F, Cl, Br, I, eine geradkettige oder verzweigte Alkylgruppe mit 1 bis 20 C-Atomen, eine geradkettige oder verzweigte Alkoxygruppe mit 1 bis 20 C-Atomen, eine teilweise oder vollständig halogenierte geradkettige oder verzweige Alkylgruppe mit 1 bis 20 C-Atomen, eine teilweise oder vollständig halogenierte geradkettige oder verzweige Alkoxygruppe mit 1 bis 20 C-Atomen oder eine Aryl- oder Heteroarylgruppe mit 5 bis 40 Ringatomen, wobei mindestens ein Rest aus der Gruppe der Substituenten R⁵ bis R⁹ eine geradkettige oder verzweigte Alkylgruppe mit 1 bis 20 C-Atomen bedeutet, die teilweise oder vollständig halogeniert sein kann;
- R¹⁰, R¹¹, R¹²: sind jeweils unabhängig voneinander bei jedem Auftreten H, F, eine lineare oder verzweigte Alkylgruppe mit 1 bis 20 C-Atomen, die teilweise oder vollständig halogeniert sein kann, oder eine Arylgruppe mit 6 bis 14 C-Atomen;
- R: ist bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen;
mindestens ein hydrophiles Monomer, dessen unvernetztes Homopolymer wasserlöslich oder in Wasser quellbar ist;
mindestens einen UV-Absorber und mindestens einen Quervernetzer, wobei das molare Verhältnis der Summe aller Verbindungen der Formel (1) zur Summe aller hydrophilen Monomere 1:0,51 bis 1:1,24 ist.

Der Begriff Zusammensetzung wird im Folgenden synonym für den Begriff Formulierung oder Zubereitung verwendet.

Die Zusammensetzung kann die genannten notwendigen oder optionalen Bestandteile umfassen oder enthalten, daraus im wesentlichen oder daraus bestehen. Alle Verbindungen oder Komponenten, die in den Zusammensetzungen verwendet werden können, sind entweder bekannt und käuflich erwerbbar oder können nach bekannten Verfahren synthetisiert werden, wie beispielsweise für die Verbindungen der Formel (1) in WO 2017/032442, Seite 21 und 22 sowie Seite 44 bis 78 beschrieben. Das Dokument WO 2017/032442 ist hiermit per Bezugnahme Bestandteil der Beschreibung.

Die Verbindungen der Formel (1) und deren bevorzugte Ausführungsformen, wie nachfolgend beschrieben, umfassen alle Stereoisomere oder racemischen Mischungen.

Im Rahmen der vorliegenden Erfindung werden unter einer geradkettigen oder verzweigten Alkylgruppe mit 1 bis 20 C-Atomen die Reste Methyl, Ethyl, n-Propyl, i-Propyl, Cyclopropyl, n-Butyl, i-Butyl, s-Butyl, t-Butyl, Cyclobutyl, 2-Methylbutyl, n-Pentyl, s-Pentyl, t-Pentyl, 2-Pentyl, neo-Pentyl, Cyclopentyl, n-Hexyl, s-Hexyl, t-Hexyl, 2-Hexyl, 3-Hexyl, neo-Hexyl, 2-Methylpentyl, n-Heptyl, 2-Heptyl, 3-Heptyl, 4-Heptyl, n-Octyl, 2-Ethylhexyl, n-Nonyl, n-Decyl, 2-(2,6-Dimethyl)octyl, 3-(3,7-Dimethyl)octyl, 1,1-Dimethyl-n-hex-1-yl-, 1,1-Dimethyl-n-hept-1-yl-, 1,1-Dimethyl-n-oct-1-yl-, n-Undecyl, n-Dodecyl, 1,1-Dimethyl-n-dec-1-yl-, n-Tridecyl, n-Tetradecyl, 1,1-Dimethyl-n-dodec-1-yl-, n-Heptadecyl, n-Hexadecyl, 1,1-Dimethyl-n-tetradec-1-yl-, n-Octadecyl, n-Nonadecyl, 1,1-Dimethyl-n-hexadec-1-yl-, 1,1-Dimethyl-n-octadec-1-yl-, 1,1-Diethyl-n-hex-1-yl-, 1,1-Diethyl-n-hept-1-yl-, 1,1-Diethyl-n-oct-1-yl-, 1,1-Diethyl-n-dec-1-yl-, 1,1-Diethyl-n-dodec-1-yl-, 1,1-Diethyl-n-tetradec-1-yl-, 1,1-Diethyl-n-hexadec-1-yl-, 1,1-Diethyl-n-octadec-1-yl- und n-Eicosyl verstanden.

Teilweise halogenierte Alkylgruppen entsprechen den geradkettigen oder verzweigten Alkylgruppen mit 1 bis 20 C-Atomen, wie zuvor beschrieben, wobei mindestens ein H-Atom gegen ein Halogenatom ausgetauscht wurde, jedoch nicht alle H-Atome gegen Halogenatome ausgetauscht wurden. Bevorzugte Halogenatome sind F-Atome oder Cl-Atome, besonders bevorzugt sind teilweise fluorierte Alkylgruppen, beispielsweise 2,2,2-Trifluorethyl.

Vollständig halogenierte Alkylgruppen entsprechen den geradkettigen oder verzweigten Alkylgruppen mit 1 bis 20 C-Atomen, wie zuvor beschrieben, wobei alle H-Atome gegen das entsprechende Halogenatom ausgetauscht wurden. Bevorzugte Halogenatome sind F-Atome oder Cl-Atome, besonders bevorzugt sind vollständig fluorierte Alkylgruppen. Beispiele hierfür sind Trifluormethyl, Pentafluorethyl oder Nonafluorbutyl.

Im Rahmen der vorliegenden Erfindung entspricht Alkandiyl einer divalenten Gruppe, die sich von einer geradkettigen oder verzweigten Alkylgruppe mit 1 bis 20 C-Atomen ableitet, wie zuvor beschrieben.
Im Rahmen der vorliegenden Erfindung entspricht Alkendiyl einer divalenten Gruppe, die sich von einer geradkettigen oder verzweigten Alkenylgruppe mit 1 bis 20 C-Atomen ableitet, die einer geradkettigen oder verzweigten Alkylgruppe mit 1 bis 20 C-Atomen entspricht, wie zuvor beschrieben, jedoch mindestens eine Doppelbindung enthält.
Im Rahmen der vorliegenden Erfindung entspricht Alkindiyl einer divalenten Gruppe, die sich von einer geradkettigen oder verzweigten Alkinylgruppe mit 1 bis 20 C-Atomen ableitet, die einer geradkettigen oder verzweigten Alkylgruppe mit 1 bis 20 C-Atomen entspricht, wie zuvor beschrieben, jedoch mindestens eine Dreifachbindung enthält.
Alkandiyl, Alkendiyl oder Alkindiyl kann entsprechem mit einem oder mehreren Resten R substituiert sein.

Im Rahmen der vorliegenden Erfindung entspricht eine teilweise halogenierte oder vollständig halogenierte geradkettige oder verzweigte Alkoxygruppe mit 1 bis 20 C-Atomen einer teilweise halogenierten oder vollständig halogenierten geradkettigen oder verzweigten Alkylgruppe mit 1 bis 20 C-Atomen, wobei die zuvor beschriebene Alkylgruppe entsprechend an ein O-Atom gebunden vorliegt und kann als O-Alkyl abgekürzt werden.

Eine Arylgruppe im Sinne dieser Erfindung enthält 6 bis 40 aromatische Ringatome, bevorzugt C-Atome. Eine Heteroarylgruppe im Sinne dieser Erfindung enthält 5 bis 40 aromatische Ringatome, wobei die Ringatome C-Atome und mindestens ein Heteroatom umfassen, mit der Maßgabe, dass die Summe aus C-Atomen und Heteroatomen mindestens 5 ergibt. Die Heteroatome sind bevorzugt ausgewählt aus N, O und/oder S. Dabei wird unter einer Arylgruppe bzw. Heteroarylgruppe entweder ein einfacher aromatischer Cyclus, also Phenyl, abgeleitet von Benzol, bzw. ein einfacher heteroaromatischer Cyclus, beispielsweise abgeleitet von Pyridin, Pyrimidin oder Thiophen, oder eine kondensierte Aryl- oder Heteroarylgruppe, beispielsweise Naphthalin, Anthracen, Phenanthren, Chinolin oder Isochinolin, verstanden.

Unter einer Aryl- oder Heteroarylgruppe mit 5 - 40 Ringatomen, welches noch jeweils mit einem Rest R substituiert sein kann und welches über beliebige Positionen am Aromaten bzw. Heteroaromaten verknüpft sein kann, werden beispielsweise die folgenden Gruppen Benzol, Naphthalin, Anthracen, Benzanthracen, Phenanthren, Benzophenanthren, Pyren, Chrysen, Perylen, Fluoranthen, Benzfluoranthen, Naphthacen, Pentacen, Benzpyren, Biphenyl, Biphenylen, Terphenyl, Terphenylen, Fluoren, Spirobifluoren, Dihydrophenanthren, Dihydropyren, Tetrahydropyren, cis- oder trans-Indenofluoren, cis- oder trans-Monobenzoindenofluoren, cis- oder trans-Dibenzoindenofluoren, Truxen, Isotruxen, Spirotruxen, Spiroisotruxen, Furan, Benzofuran, Isobenzofuran, Dibenzofuran, Thiophen, Benzothiophen, Isobenzothiophen, Dibenzothiophen, Pyrrol, Indol, Isoindol, Carbazol, Indolocarbazol, Indenocarbazol, Pyridin, Chinolin, Isochinolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin, Benzpyrimidin, Chinoxalin, 1,5-Diazaanthracen, 2,7-Diazapyren, 2,3-Diazapyren, 1,6-Diazapyren, 1,8-Diazapyren, 4,5-Diazapyren, 4,5,9,10-Tetraazaperylen, Pyrazin, Phenazin, Phenoxazin, Phenothiazin, Fluorubin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin und Benzothiadiazol verstanden.

Im Rahmen der Erfindung ist R bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen. R ist bevorzugt bei jedem Auftreten Methyl, Ethyl, Trifluormethyl oder Methoxy.

Im Rahmen der Erfindung ist R⁰ eine geradkettige oder verzweigte Alkylgruppe mit 1 bis 10 C-Atomen, vorzugsweise eine geradkettige oder verzweigte Alkylgruppe mit 1 bis 4 C-Atomen.

In einer Ausführungsform der Erfindung werden bevorzugt Verbindungen der Formel (1) für die erfindungsgemäße Zusammensetzung ausgewählt, in denen Y die Bedeutung O hat und X die Bedeutung O, S oder NR⁰ hat, wobei R⁰ eine zuvor angegebene Bedeutung hat.

Es werden weiterhin bevorzugt Verbindungen der Formel (1) für die erfindungsgemäße Zusammensetzung gewählt, in denen Y die Bedeutung O und X die Bedeutung O oder S haben, bevorzugt bei denen Y die Bedeutung O und X die Bedeutung O haben. Derartige besonders bevorzugte Verbindungen der Formel (1) können durch die Formel (2) dargestellt werden, 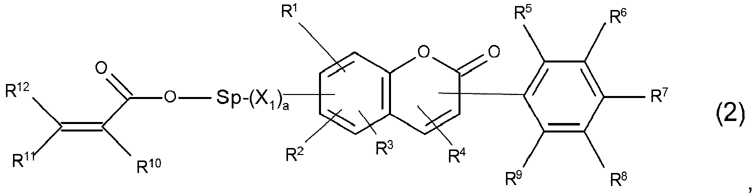 wobei X₁, a, Sp, R¹ bis R¹² eine zuvor genannte oder eine nachfolgend bevorzugt genannte Bedeutung haben.

In Verbindungen der Formel (1) oder (2), wie zuvor beschrieben, ist X₁ bevorzugt O und a entspricht 0 oder 1. Besitzt der Spacer Sp eine gerade Anzahl von C-Atomen, so ist a bevorzugt 1. Besitzt der Spacer Sp eine ungerade Anzahl von C-Atomen, so ist a bevorzugt 0.

In Verbindungen der Formel (1) oder (2), wie zuvor beschrieben oder bevorzugt beschrieben, ist Sp bevorzugt ein Alkandiyl mit 6 bis 20 C-Atomen, das mit einem oder mehreren R substituiert sein kann, besonders bevorzugt ein Alkandiyl mit 8, 9, 10, 11, 12, 13, 14, 15 oder 16 C-Atomen, das mit einem oder mehreren R substituiert sein kann, ganz besonders bevorzugt ein Alkandiyl mit 9, 10, 11, 12, 13 oder 14 C-Atomen, das mit einem oder mehreren R substituiert sein kann. Das Alkandiyl, wie zuvor beschrieben, ist bevorzugt unsubstituiert. Das Alkandiyl ist ganz besonders bevorzugt -(CH₂)₁₁- und -(CH₂)₁₂-.

In Verbindungen der Formel (1) oder (2), wie zuvor beschrieben oder bevorzugt beschrieben, sind die Substituenten R¹, R², R³ und R⁴ bevorzugt H, was durch Verbindungen der Formel (3) dargestellt werden kann, 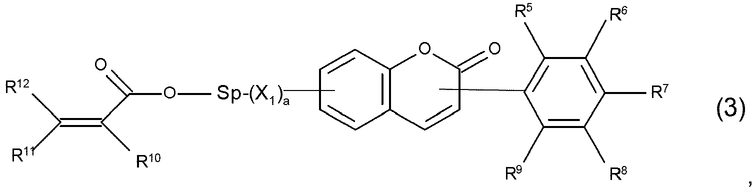 wobei X₁, a, Sp, R⁵ bis R¹² eine zuvor genannte oder eine zuvor oder nachfolgend bevorzugt genannte Bedeutung haben.

In einer Ausführungsform der Erfindung werden bevorzugt Verbindungen der Formel (1), (2) oder (3) für die erfindungsgemäße Zusammensetzung ausgewählt, wie zuvor beschrieben oder als bevorzugt beschrieben, wobei die Substituenten R¹¹ und R¹² H bedeuten und R¹⁰ eine zuvor angegebene Bedeutung hat.
Der Substituent R¹⁰ ist bevorzugt H oder eine geradkettige oder verzweigte Alkylgruppe mit 1, 2, 3, 4, 5 oder 6 C-Atomen oder eine unsubstituierte oder ein- oder mehrfach durch R substituierte Phenylgruppe. Der Substituent R¹⁰ in Verbindungen der Formel (1), (2) oder (3) ist besonders bevorzugt H, Methyl, Ethyl oder Phenyl, ganz besonders bevorzugt H oder Methyl.
Ist der Substituent R¹⁰ in Verbindungen der Formel (1), (2) oder (3), wie zuvor beschrieben, H, dann bezeichnet man diese Monomere als Acrylate. Ist der Substituent R¹⁰ in Verbindungen der Formel (1), (2) oder (3), wie zuvor beschrieben, Methyl, dann bezeichnet man diese Monomere als Methacrylate. Acrylate sind besonders bevorzugt.

In Verbindungen der Formel (1), (2) und (3), wie zuvor beschrieben oder als bevorzugt beschrieben, sind die Substituenten R¹¹, R¹², R⁵, R⁶ und R⁸ bevorzugt H, was durch Verbindungen der Formel (4) dargestellt werden kann, 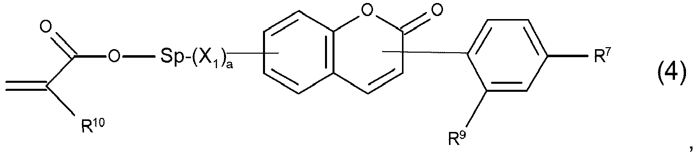 wobei X₁, a, Sp, R⁷, R⁸ und R¹² eine zuvor genannte oder eine zuvor oder nachfolgend bevorzugt genannte Bedeutung haben.

In Verbindungen der Formel (1), (2), (3) oder (4) ist R⁹ bevorzugt eine nicht fluorierte, teilweise fluorierte oder vollständig fluorierte geradkettige oder verzweigte Alkyl- oder Alkoxygruppe mit 1 bis 4 C-Atomen, wobei Sp, X₁, a, R⁷ und R¹⁰ oder einer der anderen Substituenten R¹ bis R¹² bei Ihrem Auftreten eine zuvor genannte Bedeutung oder bevorzugte Bedeutung haben.
In Verbindungen der Formel (1), (2), (3) oder (4) ist R⁷ bevorzugt eine nicht fluorierte, teilweise fluorierte oder vollständig fluorierte geradkettige oder verzweigte Alkylgruppe mit 3 bis 8 C-Atomen, wobei Sp, X₁, a, R⁹ und R¹⁰ oder einer der anderen Substituenten R¹ bis R¹² bei Ihrem Auftreten eine zuvor genannte Bedeutung oder bevorzugte Bedeutung haben.

Bevorzugte Beispiele der Verbindungen der Formel (1) bis (4), die erfindungsgemäß für die Zusammensetzung ausgewählt werden, entsprechen den Verbindungen (M-1) bis (M-63):

| | |
|---|---|
| 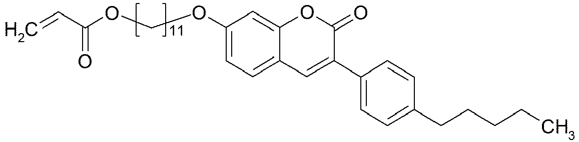 | (M-1) |
| 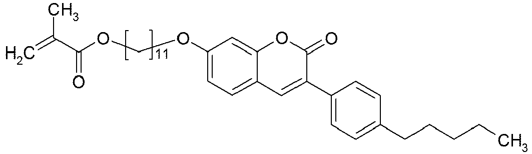 | (M-2) |
| 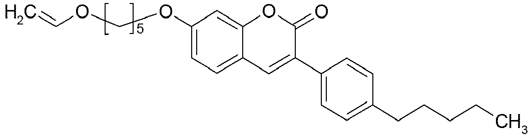 | (M-3) |
| 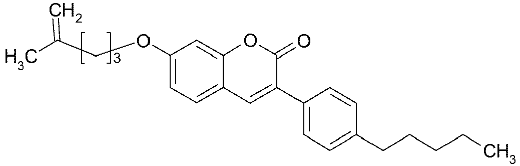 | (M-4) |
| 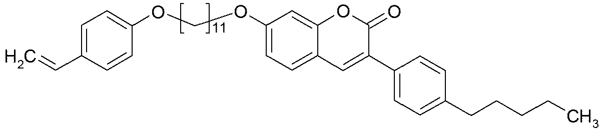 | (M-5) |
| 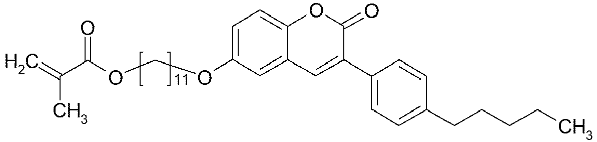 | (M-6) |
| 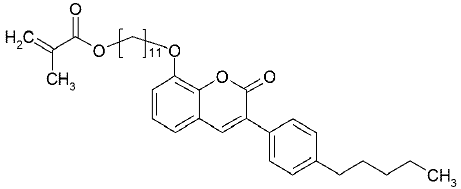 | (M-7) |
| 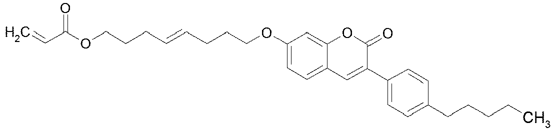 | (M-8) |
| 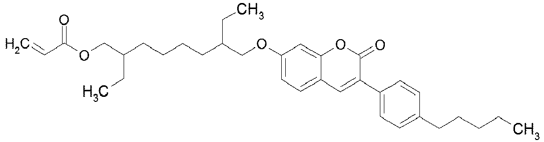 | (M-9) |
| 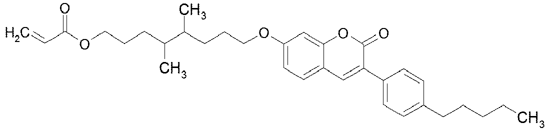 | (M-10) |
| 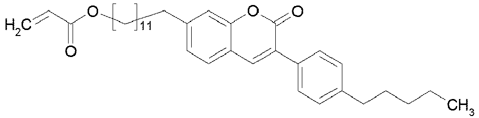 | (M-11) |
| 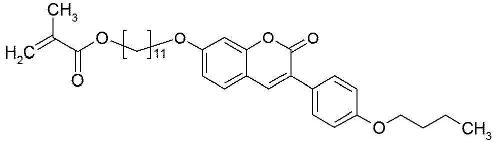 | (M-12) |
| 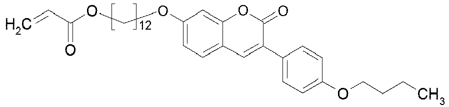 | (M-13) |
| 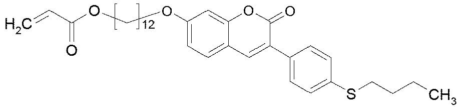 | (M-14) |
| 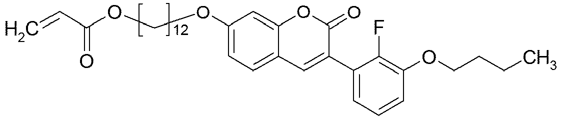 | (M-15) |
| 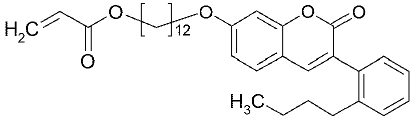 | (M-16) |
| 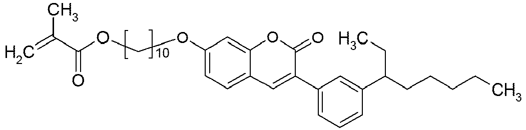 | (M-17) |
| 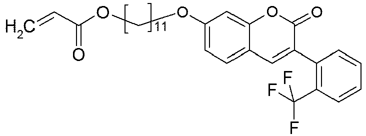 | (M-18) |
| 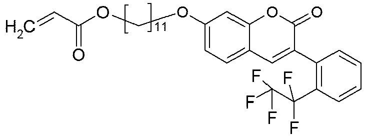 | (M-19) |
| 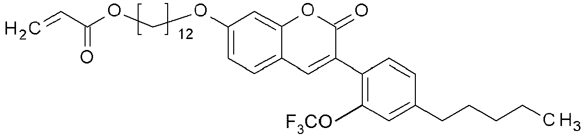 | (M-20) |
| 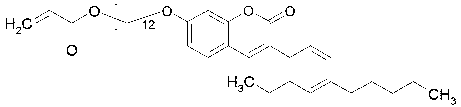 | (M-21) |
| 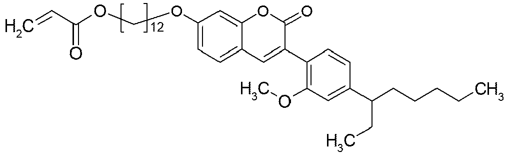 | (M-22) |
| 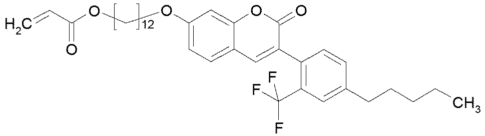 | (M-23) |
| 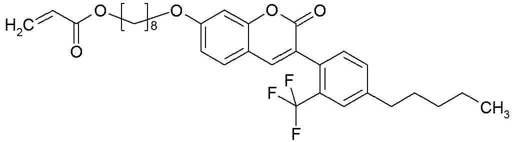 | (M-24) |
| 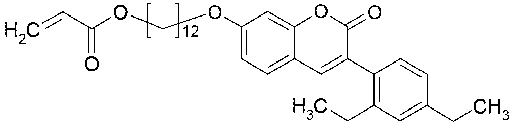 | (M-25) |
| 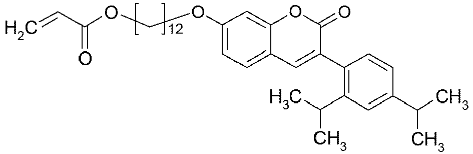 | (M-26) |
| 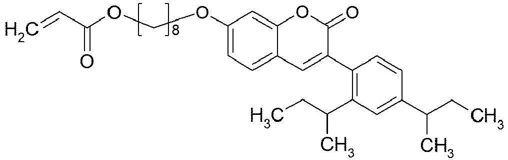 | (M-27) |
| 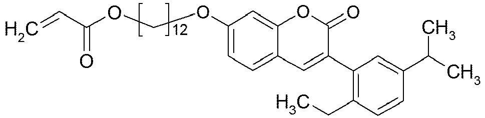 | (M-28) |
| 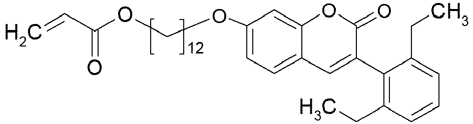 | (M-29) |
| 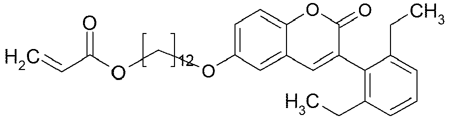 | (M-30) |
| 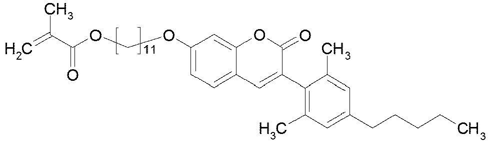 | (M-31) |
| 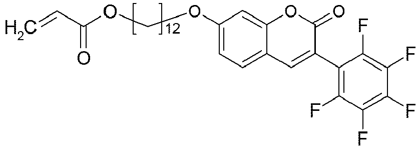 | (M-32) |
| 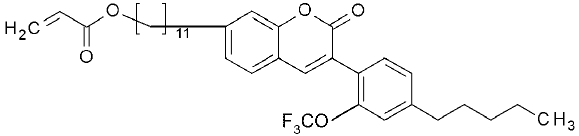 | (M-33) |
| 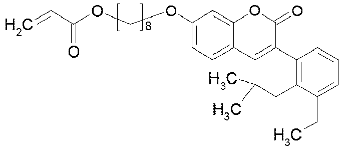 | (M-34) |
| 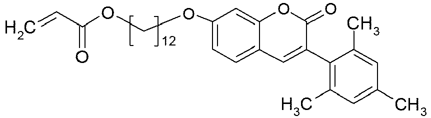 | (M-35) |
| 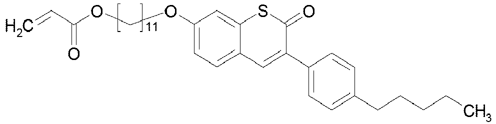 | (M-36) |
| 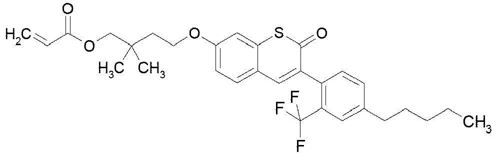 | (M-37) |
| 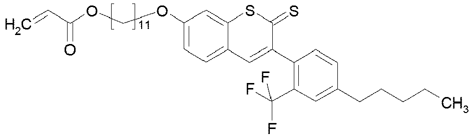 | (M-38) |
| 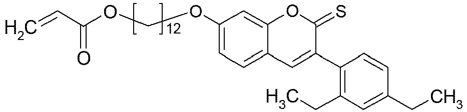 | (M-39) |
| 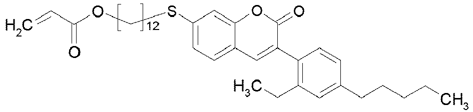 | (M-40) |
| 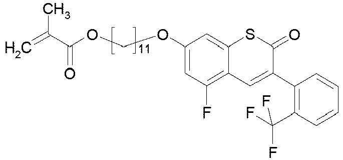 | (M-41) |
| 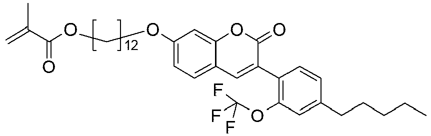 | (M-42) |
| 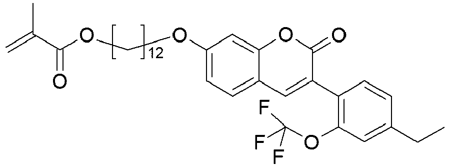 | (M-43) |
| 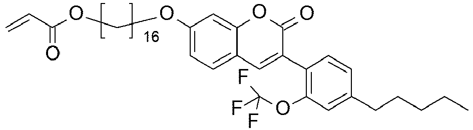 | (M-44) |
| 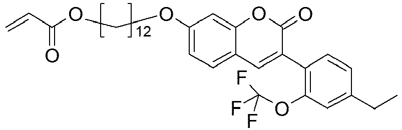 | (M-45) |
| 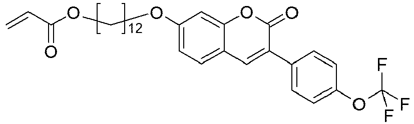 | (M-46) |
| 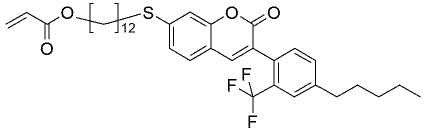 | (M-47) |
| 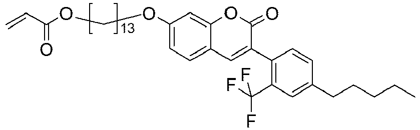 | (M-48) |
| 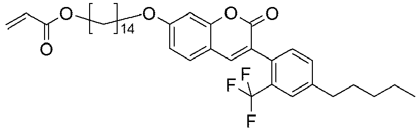 | (M-49) |
| 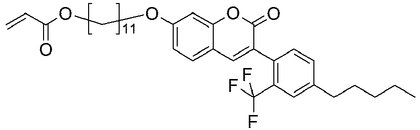 | (M-50) |
| 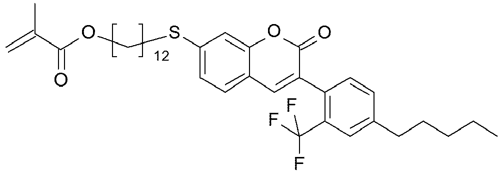 | (M-51) |
| 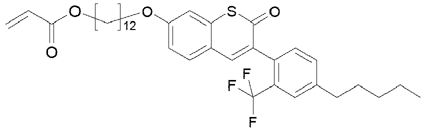 | (M-52) |
| 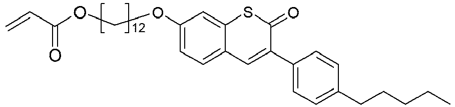 | (M-53) |
| 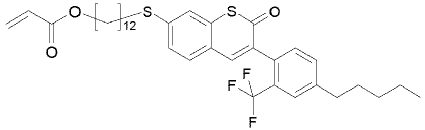 | (M-54) |
| 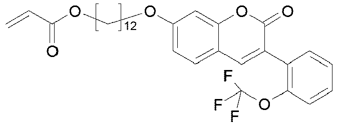 | (M-55) |
| 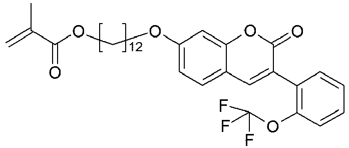 | (M-56) |
| 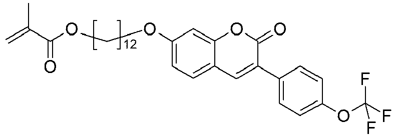 | (M-57) |
| 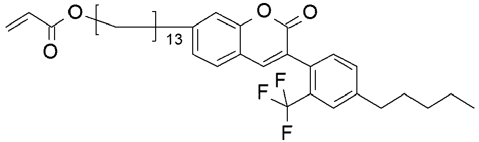 | (M-58) |
| 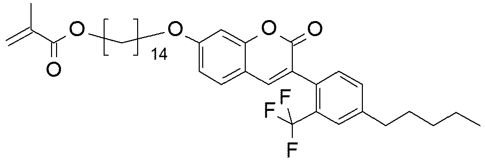 | (M-59) |
| 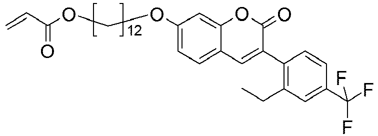 | (M-60) |
| 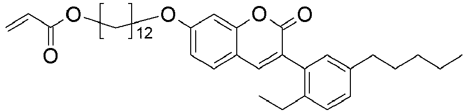 | (M-61) |
| 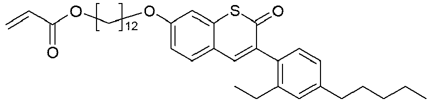 | (M-62) |
| 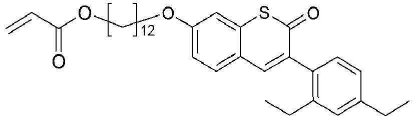 | (M-63). |

Die erfindungsgemäße Zusammensetzung enthält neben einer oder mehrerer Verbindungen der Formel (1), (2), (3), (4), wie zuvor beschrieben oder bevorzugt beschrieben oder den Verbindungen (M-1) bis (M-63) auch mindestens ein hydrophiles Monomer in dem molaren Verhältnis, wie zuvor beschrieben oder nachfolgend bevorzugt beschrieben.
Das hydrophile Monomer ist dadurch gekennzeichnet, dass sein entsprechendes Homopolymer in Wasser löslich oder in Wasser quellbar ist. Es zeichnet sich durch die Anwesenheit polarer Gruppen aus, die Wasser koordinieren können, beispielsweise OH- oder NH₂-Gruppen.

Geeignete Beispiele für hydropile Monomere sind 3-Hydroxypropylmethacrylat, 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat oder 12-Hydroxydodecylacrylat oder eine Kombination dieser Verbindungen. Das hydrophile Monomer oder die hydrophilen Monomere werden bevorzugt aus Acrylat- oder Methacrylat-Monomeren der oben genannten Gruppe ausgewählt.

Bevorzugte hydrophile Monomere sind n-Hydroxyalkylacrylate und -Methacrylate mit 1 bis 4- C-Atomen in der Alkylkette.

Besonders bevorzugt werden 2-Hydroxyethylmethacrylat (HEMA), 2-Hydroxyethylacrylat (HEA) oder eine Mischung dieser Monomere für die erfindungsgemäße Zusammensetzung ausgewählt.

Ein weiterer Gegenstand der Erfindung ist demzufolge eine Zusammensetzung, wie zuvor beschrieben oder nachfolgend bevorzugt beschrieben, wobei das mindestens eine hydrophile Monomer aus 3-Hyroxypropylmetacrylat, 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat, 12-Hydroxydodecylacrylat, Ethylenglycolphenyletheracrylat, Ethylenglycolphenylethermethacrylat oder einer Kombination dieser Verbindungen ausgewählt wird.

Die erfindungsgemäße Zusammensetzung enthält neben einer oder mehrerer Verbindungen der Formel (1), (2), (3), (4), wie zuvor beschrieben oder bevorzugt beschrieben oder den Verbindungen (M-1) bis (M-63) auch ein hydrophiles Monomer oder eine Kombination hydrophiler Monomere, wie zuvor beschrieben, wobei das molare Verhältnis der Summe aller Verbindungen der Formel (1) oder der bevorzugten Verbindungen der Formel (1) zur Summe aller hydrophilen Monomere bevorzugt 1:0,56 bis 1:1,2 beträgt oder besonders bevorzugt 1:0,6 bis 1:1 beträgt.

Die erfindungsgemäße Zusammensetzung kann neben einer oder mehrerer Verbindungen der Formel (1), (2), (3), (4), wie zuvor beschrieben oder bevorzugt beschrieben oder den Verbindungen (M-1) bis (M-63) und den hydrophilen Monomeren, wie zuvor beschrieben, in den genannten molaren Verhältnissen, mindestens ein weiteres nicht hydrophiles Monomer, welches nicht der Formel (1) entspricht und/oder einen mindestens einen Blauabsorber enthalten.

Ein weiterer Gegenstand der Erfindung ist daher die Zusammensetzung, wie zuvor beschrieben oder bevorzugt beschrieben, dadurch gekennzeichnet, dass sie mindestens ein weiteres nicht hydrophiles Monomer, welches nicht der Formel (1) oder einer bevorzugten Ausführungsform der Verbindungen der Formel (1) entspricht enthält.

Ein weiterer Gegenstand der Erfindung ist daher die Zusammensetzung, wie zuvor beschrieben oder bevorzugt beschrieben, dadurch gekennzeichnet, dass sie mindestens einen Blauabsorber enthält.

Geeignete Blauabsorber sind Stoffe, die im blauen Wellenlängenbereich des sichtbaren Lichts Absorption zeigen. Bevorzugt wird ein Blauabsorber ausgewählt, der ebenfalls ein Acrylat oder ein Methacrylat ist und bei der Polymerisation als weiteres Monomer zur Verfügung steht. Aus der Literatur sind geeignete Blauabsorber bekannt, beispielsweise aus WO 2012/167124. Ein besonders bevorzugter Blauabsorber ist N-2-[3-(2'-methylphenylazo)-4-hydroxyphenylethyl]ethyl methacrylamid. Sie können der erfindungsgemäßen Zusammensetzung zugesetzt werden, damit die polymerisierte Zusammensetzung neben dem UV-Licht auch kurzwelligs sichtbares Licht filtern kann, um damit die Netzhaut zu schützen, wenn das Material zur Herstellung eines ophthalmologischen Produkts verwendet wird.

Das nicht hydrophile Monomer oder die nicht hydrophilen Monomere, welche(s) nicht der Formel (1) oder einer bevorzugten Ausführungsform der Verbindungen der Formel (1) entspricht/entsprechen, können zur weiteren Optimierung der Zusammensetzung und des entsprechenden resultierenden Copolymeren zugesetzt werden. Es handelt sich hier um eine polymerisierbare Substanz, die weitere aliphatische Reste und/oder aromatische Reste und/oder Etherketten und/oder fluorierte Reste trägt.

Beispiele für solche Monomere sind: n-Butylacrylat, n-Butylmethacrylat, Ethylmethacrylat, Ethylacrylat, Methylmethacrylat, Methylacrylat, n-Propylmethacrylat, n-Propylacrylat, iso-Propylmethacrylat, iso-Propylacrylat, n-Pentylacrylat, n-Pentylmethacrylat, iso-Pentylmethacrylat, iso-Pentylacrylat, s-Butylacrylat, s-Butylmethacrylat, n-Hexylacrylat, n-Hexylmethacrylat, s-Pentylacrylat, s-Pentylmethacrylat, iso-Hexylacrylat, iso-Hexylmethacrylat, n-Octylacrylat, n-Octylmethacrylat, iso-Octylacrylat, iso-Octylmethacrylat, n-Octadecylacrylat, n-Octadecylmethacrylat, 2-Ethylhexylacrylat, 2-Ethylhexylmethacrylat, Stearylmethacrylat, Stearylacrylat, n-Dodecylacrylat, n-Dodecylmethacrylat, 2,2-Dimethylpropylacrylat, 2,2-Dimethylpropylmethacrylat, Trimethylcyclohexylacrylat, Trimethylcyclohexylmethacrylat, isoButylacrylat, iso-Butylmethacrylat, 2-(4-Bromphenyl)ethylmethacrylat, 4-Phenylbutylmethacrylat, 4-Methylphenylmethacrylat, Phenylmethacrylat, 4-Methylphenylacrylat, Benzylacrylat, Benzylmethacrylat, 2-Benzyloxyethylmethacrylat, 3-Benzyloxypropylmethacrylat, Phenylethylacrylat, Phenylethylmethacrylat, 3-Phenylpropylmethacrylat, 2-Phenoxyethylacrylat, 2-Benzyloxyethylacrylat, 3-Phenylpropylacrylat, 4-Methylbenzylacrylat, Phenylacrylat, 2-(Phenylthio)ethylmethacrylat, 4-Phenylbutylacrylat, 5-Phenylpentylacrylat, 3-Benzyloxypropylacrylat, 2-(Phenylthio)propylacrylat, 2-(Phenylthio)ethylacrylat, 4-Phenylbutylacrylat, 4-Methylbenzylmethacrylat, 2-(2-Methylphenyl)ethylacrylat, 2-(2-Methylphenyl)ethylmethacrylat, 2-(3-Methylphenyl)ethylacrylat, 2-(3-Methylphenyl)ethylmethacrylat, 2-(4-Methylphenyl)ethylacrylat, 2-(4-Methylphenyl)ethylmethacrylat, 2-(4-Propylphenyl)ethylacrylat, 2-(4-Propylphenyl)ethylmethacrylat, 2-(4-(1-Methylethyl)phenyl)ethylacrylat, 2-(4-(1-Methylethyl)phenyl)ethylmethacrylat, 2-(4-Methoxyphenyl)ethylmethacrylat, 2-(4-Methoxyphenyl)ethylacrylat, 2-(4-Cyclohexylphenyl)ethylacrylat, 2-(4-Cyclohexylphenyl)ethylmethacrylat, 2-(4-Chlorphenyl)ethylmethacrylat, 2-(4-Chlorphenyl)ethylacrylat, 2-(3-Chlorphenyl)ethylmethacrylat, 2-(3-Chlorphenyl)ethylacrylat, 2-(2-Chlorphenyl)ethylmethacrylat, 2-(2-Chlorphenyl)ethylacrylat, 2-(4-Bromphenyl)ethylacrylat, 2-(4-Phenylphenyl)ethylmethacrylat, 2-(4-Phenylphenyl)ethylacrylat, 2-(3-Phenylphenyl)ethylmethacrylat, 2-(3-Phenylphenyl)ethylacrylat, 2-(4-Benzylphenyl)ethylmethacrylat, 2-(4-Benzylphenyl)ethylacrylat, 2-(Phenylthio)ethylacrylat, 3-Benzyloxypropylacrylat, 2-[2-(Benzyloxy)ethoxy]ethylacrylat, 2-[2-(Benzyloxy)ethoxy]ethylmethacrylat, Pentafluorphenylmethacrylat, Heptadecafluordecylmethacrylat, Dodecafluorheptylmethacrylat, Heptadecafluorodecylacrylat, Trifluorethylmethacrylat, Octafluorpentylmethacrylat, Hexafluorbutylmethacrylat, Octafluorpentylacrylat, Trifluorethylacrylat, Heptafluorbutylacrylat, Tetrafluorpropylmethacrylat, Hexafluorbutylacrylat, Pentafluorphenylacrylate, Hexafluor-iso-propylmethacrylat oder eine Kombination dieser Verbindungen.

Bevorzugte nicht hydrophile Monomere sind Alkylacrylate und - Methacrylate mit einer Kettenlänge von 8 bis 20 C-Atomen, sowie n-Phenylalkoxy oder -alkylacrylate und -alkylmethacrylate mit einer Kettenlänge der Aklylen- bzw. Alkyloxygruppe von 1 bis 8 C-Atomen.

Besonders bevorzugt wird als nicht hydrophiles Monomer n-Octadecylmethacrylat (C18MA) oder 2-Phenoxyethylacrylat (EGPEA) oder eine Kombination dieser Verbindungen ausgewählt. Eine synonyme Bezeichnung für 2-Phenoxyethylacrylat ist Ethylenglycolphenyletheracrylat.

Ein weiterer Gegenstand der Erfindung ist eine Zusammensetzung, wie zuvor beschrieben oder als bevorzugt beschrieben, wobei mindestens ein nicht hydrophiles Monomer ausgewählt aus n-Butylacrylat, n-Butylmethacrylat, Ethylmethacrylat, Ethylacrylat, Methylmethacrylat, Methylacrylat, n-Propylmethacrylat, n-Propylacrylat, iso-Propylmethacrylat, iso-Propylacrylat, n-Pentylacrylat, n-Pentylmethacrylat, iso-Pentylmethacrylat, iso-Pentylacrylat, s-Butylacrylat, s-Butylmethacrylat, n-Hexylacrylat, n-Hexylmethacrylat, s-Pentylacrylat, s-Pentylmethacrylat, iso-Hexylacrylat, iso-Hexylmethacrylat, n-Octylacrylat, n-Octylmethacrylat, iso-Octylacrylat, iso-Octylmethacrylat, n-Octadecylacrylat, n-Octadecylmethacrylat, 2-Ethylhexylacrylat, 2-Ethylhexylmethacrylat, Stearylmethacrylat, Stearylacrylat, n-Dodecylacrylat, n-Dodecylmethacrylat, 2,2-Dimethylpropylacrylat, 2,2-Dimethylpropylmethacrylat, Trimethylcyclohexylacrylat, Trimethylcyclohexylmethacrylat, isoButylacrylat, iso-Butylmethacrylat, 2-(4-Bromphenyl)ethylmethacrylat, 4-Phenylbutylmethacrylat, 4-Methylphenylmethacrylat, Phenylmethacrylat, 4-Methylphenylacrylat, Benzylacrylat, Benzylmethacrylat, 2-Benzyloxyethylmethacrylat, 3-Benzyloxypropylmethacrylat, Phenylethylacrylat, Phenylethylmethacrylat, 3-Phenylpropylmethacrylat, 2-Phenoxyethylacrylat, 2-Benzyloxyethylacrylat, 3-Phenylpropylacrylat, 4-Methylbenzylacrylat, Phenylacrylat, 2-(Phenylthio)ethylmethacrylat, 4-Phenylbutylacrylat, 5-Phenylpentylacrylat, 3-Benzyloxypropylacrylat, 2-(Phenylthio)propylacrylat, 2-(Phenylthio)ethylacrylat, 4-Phenylbutylacrylat, 4-Methylbenzylmethacrylat, 2-(2-Methylphenyl)ethylacrylat, 2-(2-Methylphenyl)ethylmethacrylat, 2-(3-Methylphenyl)ethylacrylat, 2-(3-Methylphenyl)ethylmethacrylat, 2-(4-Methylphenyl)ethylacrylat, 2-(4-Methylphenyl)ethylmethacrylat, 2-(4-Propylphenyl)ethylacrylat, 2-(4-Propylphenyl)ethylmethacrylat, 2-(4-(1-Methylethyl)phenyl)ethylacrylat, 2-(4-(1-Methylethyl)phenyl)ethylmethacrylat, 2-(4-Methoxyphenyl)ethylmethacrylat, 2-(4-Methoxyphenyl)ethylacrylat, 2-(4-Cyclohexylphenyl)ethylacrylat, 2-(4-Cyclohexylphenyl)ethylmethacrylat, 2-(4-Chlorphenyl)ethylmethacrylat, 2-(4-Chlorphenyl)ethylacrylat, 2-(3-Chlorphenyl)ethylmethacrylat, 2-(3-Chlorphenyl)ethylacrylat, 2-(2-Chlorphenyl)ethylmethacrylat, 2-(2-Chlorphenyl)ethylacrylat, 2-(4-Bromphenyl)ethylacrylat, 2-(4-Phenylphenyl)ethylmethacrylat, 2-(4-Phenylphenyl)ethylacrylat, 2-(3-Phenylphenyl)ethylmethacrylat, 2-(3-Phenylphenyl)ethylacrylat, 2-(4-Benzylphenyl)ethylmethacrylat, 2-(4-Benzylphenyl)ethylacrylat, 2-(Phenylthio)ethylacrylat, 3-Benzyloxypropylacrylat, 2-[2-(Benzyloxy)ethoxy]ethylacrylat, 2-[2-(Benzyloxy)ethoxy]ethylmethacrylat, Pentafluorphenylmethacrylat, Heptadecafluordecylmethacrylat, Dodecafluorheptylmethacrylat, Heptadecafluorodecylacrylat, Trifluorethylmethacrylat, Octafluorpentylmethacrylat, Hexafluorbutylmethacrylat, Octafluorpentylacrylat, Trifluorethylacrylat, Heptafluorbutylacrylat, Tetrafluorpropylmethacrylat, Hexafluorbutylacrylat, Pentafluorphenylacrylate, Hexafluor-iso-propylmethacrylat oder eine Kombination dieser Verbindungen enthalten ist.

In den erfindungsgemäßen Zusammensetzungen, wie zuvor beschrieben, ist/sind auch mindestens ein Quervernetzer und mindestens ein UV-Absorber enthalten. Dabei ist es auch möglich, dass eine Substanz beide Eigenschaften übernimmt, d.h. zugleich Quervernetzer und UV-Absorber ist.

Bei einem Quervernetzer handelt es sich um ein Monomer mit mindestens zwei polymerisierbaren Gruppen. Bevorzugt besitzt der Quervernetzer zwei polymerisierbare Gruppen. Optional kann der Quervernetzer auch funktionelle Gruppen enthalten, die in der Lage sind, Wasser zu koordinieren, wie beispielsweise OH- oder NH₂-Gruppen. Derartig funktionalisierte Quervernetzer sind ebenfalls geeignete hydrophile Monomere im Sinn der Erfindung und werden bevorzugt in Kombination mit den zuvor beschriebenen hydrophilen Monomeren eingesetzt.

Beispiele für Quervernetzer sind:
Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, Ethylenglycoldimethacrylat, N,N'-Dihydroxyethylenbisacrylamid, Thiodiethylenglycoldiacrylat, 1,3-Propandioldimethacrylat, Neopentylglycoldiacrylat, 2,3-Propandioldimethacrylat, Di(ethylenglycol)diacrylat, N,N'-Hexamethylenbisacrylamid, 1,3-Butandioldimethacrylat, 1,6-Hexandioldiacrylat, 1,4-Butandioldimethacrylat, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, 1,6-Hexandioldimethacrylat, Tri(ethyleneglycol)diacrylat, Triethyleneglycoldimethacrylat, Tetra(ethylenglycol)diacrylat, Tetra(ethyleneglycol)dimethacrylat, Poly(ethylenglycol)dimethacrylat, Poly(ethylenglycol)diacrylat oder eine Kombination dieser Verbindungen.

Bevorzugte Quervernetzer sind Ethylenglycoldimethacrylat, 1,3-Propandioldiacrylat, 1,4-Butandioldimethacrylat, 1,6-Hexandioldimethacrylat, Glyceryl-1,3-dimethacrylat und Diallylphthalat. Ganz besonders bevorzugt wird Glyceryl-1,3-dimethacrylat (GDMA), Ethylenglycoldimethacrylat (EGDMA) oder eine Kombination dieser Verbindungen erfindungsgemäß ausgewählt.

Ein weiterer Gegenstand der Erfindung ist demzufolge eine Zusammensetzung, wie zuvor beschrieben oder nachfolgend bevorzugt beschrieben, wobei der Quervernetzer aus der Gruppe Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, Ethylenglycoldimethacrylat, N,N'-Dihydroxyethylenbisacrylamid, Thiodiethylenglycoldiacrylat, 1,3-Propandioldimethacrylat, Neopentylglycoldiacrylat, 2,3-Propandioldimethacrylat, Di(ethylenglycol)diacrylat, N,N'-Hexamethylenbisacrylamid, 1,3-Butandioldimethacrylat, 1,6-Hexandioldiacrylat, 1,4-Butandioldimethacrylat, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, 1,6-Hexandioldimethacrylat, Tri(ethyleneglycol)diacrylat, Triethyleneglycoldimethacrylat, Tetra(ethylenglycol)diacrylat, Tetra(ethyleneglycol)dimethacrylat, Poly(ethylenglycol)dimethacrylat, Poly(ethylenglycol)diacrylat oder einer Kombination der Verbindungen ausgewählt wird.

Bei dem erfindungsgemäß auszuwählenden UV-Absorber handelt es sich um ein Molekül mit polymerisierbarer Gruppe und starker Absorption im UV-Bereich.

Beispiele für UV-Absorber sind:
2-(2-Hydroxy-5-vinylphenyl)-2H-benzotriazol, Allyl-2-hydroxybenzophenon, 2-Allyl-6-(2H-benzotriazol-2-yl)-p-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-butyl)-4-hydroxy-5-(5-methoxy-2H-benzo[d][1,2,3]triazol-2-yl)phenoxy)ethyl methacrylat, 2-[3'-tert-butyl-2'-hydroxy-5'-(3"-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol, 2-[3'tert-Butyl-5'-(3"-dimethylvinylsilylpropoxy)-2'-hydroxyphenyl]-5-methoxybenzotriazol oder eine Kombination dieser Verbindungen.

Bevorzugte UV-Absorber sind Methacrylate bzw. Acrylate von Phenyltriazolen.

Ein besonders bevorzugter UV-Absorber ist 2-[3-(2H-Benzotriazol-2-yl)-4-hydroxyphenyl]ethyl methacrylat.

Ein weiterer Gegenstand der Erfindung ist demzufolge eine Zusammensetzung, wie zuvor beschrieben oder nachfolgend bevorzugt beschrieben, wobei der UV-Absorber aus der Gruppe 2-(2-Hydroxy-5-vinylphenyl)-2H-benzotriazol, Allyl-2-hydroxybenzophenon, 2-Allyl-6-(2H-benzotriazol-2-yl)-p-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-butyl)-4-hydroxy-5-(5-methoxy-2H-benzo[d][1,2,3]triazol-2-yl)phenoxy)ethyl methacrylat, 2-[3'-tert-butyl-2'-hydroxy-5'-(3"-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol, 2-[3'tert-Butyl-5'-(3"-dimethylvinylsilylpropoxy)-2'-hydroxyphenyl]-5-methoxybenzotriazol oder einer Kombination dieser Verbindungen ausgewählt wird.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0,05 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben und
0,005 bis 0,05 molare Äquivalente des oder der UV-Absorber(s), wie zuvor beschrieben oder bevorzugt beschrieben, enthalten sind.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,56 bis 1,2 molare Äquivalente oder bevorzugt 0,6 bis ein molares Äquivalent aller hydrophilen Monomere enthalten sind, wie zuvor beschrieben oder als bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,1 bis 0,2 molare Äquivalente der Summe der nicht hydrophilen Monomere enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben,
beispielsweise (M-1) bis (M-63), oder der Summe aller derartiger Verbindungen,
0,01 bis 0,03 molare Äquivalente der Summe der Quervernetzer enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen,
0,007 bis 0,02 molare Äquivalente der Summe der UV-Absorber enthalten sind, wie zuvor beschrieben oder bevorzugt beschrieben.

In einer Ausführungsform der erfindungsgemäßen Zusammensetzung ist es bevorzugt, wenn
neben dem einen molaren Äquivalent einer Verbindung der Formel (1), (2), (3), (4) oder einer bevorzugten Verbindung, wie zuvor beschrieben, beispielsweise (M-1) bis (M-63), oder der Summe aller derartiger Verbindungen und den zuvor genannten molaren Äquivalenten der Summe der hydrophilen Monomere, nicht hydrophilen Monomere, Quervernetzer und UV-Absorber,
0 bis 0,004 molare Äquivalente der Summe der Blauabsorber enthalten ist, wie zuvor beschrieben oder bevorzugt beschrieben bzw. bevorzugt 1 mikromolares Äquivalent bis 0,004 molare Äquivalente der Summe der Blauabsorber enthalten sind, wie zuvor beschrieben oder bevorzugt beschrieben, bzw. besonders bevorzugt 8 mikromolare Äquivalente bis 0,002 molare Äquivalente der Summe Blauabsorber enthalten sind, wie zuvor beschrieben oder bevorzugt beschrieben.

Die geeignete Auswahl der Menge des Blauabsorbers ist von der Bandenlage und dem entsprechenden Extinktionskoeffizienten abhängig, so dass der Fachmann in der Lage ist, die zuvor genannten molaren Äquivalente des Blauabsorbers entsprechend anzupassen. Die Auswahl der Menge des Blauabsorbers ist derart zu wählen, dass dieser das UV/VIS Spektrum des erfindungsgemäßen Copolymers so beeinflusst, dass die Transmission im blauen Wellenlängenbereich minimal ist.

In der erfindungsgemäßen Zusammensetzung, wie zuvor beschrieben oder als bevorzugt beschrieben, wird auch ein Radikalstarter zugegeben, damit eine Polymerisation der erfindungsgemäßen Zusammensetzung der Monomere, wie zuvor beschrieben, erfolgen kann.
Der Begriff Inititator, Radikalstarter oder Radikalinitiator wird synonym verwendet.

Die Polymerisation wird bevorzugt radikalisch initiiert, hierfür sind sowohl thermische Initiatoren, wie Acetylperoxid, Stearoylperoxid, 2,2'-Azo-bis-(isobutyronitril), tert-Butylperoxypivalat, 2,2'-Azo-bis-(2-cyanobutan), Benzoylperoxid, *Luperox*® *TBEC,* 2,2'-(Diazene-1,2-diyl)bis(2,4-dimethylpentanenitril), Decanoylperoxid, Di-(tert-butylcyclohexyl)-peroxydicarbonat, Lauroylperoxid, 1,1-Bis(*tert*-butylperoxy)-3,3,5-trimethylcyclohexan, Peroxydicarbonat, als auch photochemische Initiatoren, wie Darocur 2273, Darocur 3331, Darocur 1164, Irgacur 1850, Darocur 1700, Darocur 1173, Irgacur 184, Darocur 1116, Darocur 2959, Benzoinmethylether, Benzoinethylether, Irgacur 651, 2,4,6-(Trimethylbenzoyl)diphenylphosphinoxid, Bis-(2,4,6-trimethylbenzoyl)-phenylphosphinoxid, Bis-(2,6-dichlorobenzoyl)-4-propylphenylphosphinoxid, geeignet.

Es wird bevorzugt ein thermischer Initiator verwendet. Es wird bevorzugt ein thermischer Initiator verwendet, wie zuvor beschrieben. Besonders bevorzugt wird 1,1-Bis(*tert*-butylperoxy)-3,3,5-trimethylcyclohexan als Radikalinitiator eingesetzt, bevorzugt in 0,005 bis 0,05 molaren Äquivalenten bezogen auf die Summe aller in der Zusammensetzung enthaltenen Verbindungen der Formel (1), wie zuvor beschrieben oder als bevorzugt beschrieben.

Ein weiterer Gegenstand der Erfindung ist daher eine Zusammensetzung, wie zuvor beschrieben, wobei die Zusammensetzung einen Radikalinitiator enthält.

Ein weiterer Gegenstand der Erfindung ist eine Zusammensetzung, wie zuvor beschrieben oder bevorzugt beschrieben, dadurch gekennzeichnet, dass
1 molares Äquivalent einer Verbindung der Formel (1) oder einer bevorzugten Verbindung der Formel (1), wie zuvor beschrieben, oder 1 molares Äquivalent der Summe aller Verbindungen der Formel (1), wie zuvor beschrieben oder bevorzugt beschrieben;
0,51 bis 1,24 molare Äquivalente der hydrophilen Monomere, wie zuvor beschrieben oder bevorzugt beschrieben;
0 bis 0,2 molare Äquivalente der nicht hydrophilen Monomere, welche nicht der Formel (1) entsprechen, wie zuvor beschrieben oder bevorzugt beschrieben;
0,05 bis 0,5 molare Äquivalente des oder der Quervernetzer(s), wie zuvor beschrieben oder bevorzugt beschrieben;
0,005 bis 0,05 molare Äquivalente des oder der UV-Absorber(s), wie zuvor beschrieben oder bevorzugt beschrieben;
0 bis 0,004 molare Äquivalente des oder der Blauabsorber(s), wie zuvor beschrieben oder bevorzugt beschrieben;
0,005 bis 0,05 molare Äquivalente eines Radikalinitiators, wie zuvor beschrieben oder bevorzugt beschrieben, enthalten sind.

Ein weiterer Gegenstand der Erfindung ist eine Zusammensetzung, wie zuvor beschrieben oder bevorzugt beschrieben, dadurch gekennzeichnet, dass sie aus
einem molaren Äquivalent einer Verbindung der Formel (1) oder einer bevorzugten Verbindung der Formel (1), wie zuvor beschrieben, oder einem molaren Äquivalent der Summe aller Verbindungen der Formel (1), wie zuvor beschrieben oder bevorzugt beschrieben;
0,51 bis 1,24 molaren Äquivalenten der hydrophilen Monomere, wie zuvor beschrieben oder bevorzugt beschrieben;
0 bis 0,2 molaren Äquivalenten der nicht hydrophilen Monomere, welche nicht der Formel (1) entsprechen, wie zuvor beschrieben oder bevorzugt beschrieben;
0,05 bis 0,5 molaren Äquivalenten des oder der Quervernetzer(s), wie zuvor beschrieben oder bevorzugt beschrieben;
0,005 bis 0,05 molaren Äquivalenten des oder der UV-Absorber(s), wie zuvor beschrieben oder bevorzugt beschrieben;
0 bis 0,004 molaren Äquivalenten des oder der Blauabsorber(s), wie zuvor beschrieben oder bevorzugt beschrieben;
0,005 bis 0,05 molaren Äquivalenten eines Radikalinitiators, wie zuvor beschrieben oder bevorzugt beschrieben, besteht.
In dieser Ausführungsform gelten die als bevorzugt angegebenen molaren Äquivalente der Bestandteile entsprechend, wie zuvor beschrieben.

Für die Zusammensetzung gilt, dass die Ausführungsformen und die bevorzugten Ausführungsformen der Bestandteile der Zusammensetzung beliebig kombiniert werden können. Es ist bevorzugt, wenn jeweils die bevorzugten Ausführungsformen der jeweiligen Bestandteile und ihrer Mengen kombiniert werden.

Wird die erfindungsgemäße Zusammensetzung, wie zuvor beschrieben oder als bevorzugt beschrieben, polymerisiert, so entstehen vernetzte Copolymere, welche bei einer Umgebungstemperatur zwischen 16°C und 18°C weich sind und alle Vorteile haben, wie zuvor beschrieben. Sie zeigen insbesondere kaum oder kein Glistening. Der Begriff "kaum oder kein Glistening" besitzt die Bedeutung, wie zuvor beschrieben. Die Copolymere besitzen Glastemperaturen (Tg) von 15°C oder weniger und haben einen Brechungsindex von mindestens 1,5, bevorzugt von mindestens 1,52, wobei die induzierbare Änderung der Brechkraft bevorzugt noch mindestens 0,005 (Δn_{D}=0,005) ist.

Ein weiterer Gegenstand der Erfindung ist demzufolge ein vernetztes Copolymer enthaltend eine polymerisierte Zusammensetzung, wie zuvor beschrieben oder als bevorzugt beschrieben.

Die Reaktionsbedingungen einer radikalischen Polymerisation sind dem Fachmann auf dem Gebiet der Polymerchemie hinreichend bekannt. Aufgrund der Besonderheit, dass die Verbindungen der Formel (1) oder deren bevorzugte Ausführungsformen, wie zuvor beschrieben, in der Regel hydrophob sind, so kann die Mischbarkeit der Komponenten, insbesondere durch Anwesenheit der hydrophilen Monomere, in der erfindungsgemäßen Zusammensetzung eingeschränkt sein. Der Fachmann ist jedoch in der Lage, den Inititator sorgfältig zu wählen und das Verfahren bei einem thermischen Verfahren hinsichtlich der Temperatur so zuwählen, dass ein homogenes Copolymer entsteht. Im Fall einer identifizierten Mischungslücke ist die Polymerisationstemperatur so zu wählen, dass sie nicht innerhalb der Mischungslücke liegt.
Der Fachmann ist in der Lage, eine Unverträglichkeit der Materialien zu identifizieren, die zu einer Mischungslücke führen könnte. Er kann beispielsweise eine erfindungsgemäße Zusammensetzung, wie zuvor beschrieben, mit einer geeigneten Lichtquelle bestrahlen und bei verschiedenen Temperaturen UV/VIS-Spektren aufnehmen. Geeignete Wellenlängen liegen zwischen 450 nm und 750 nm. Trägt man beispielsweise die Transmission gegen die Temperatur für eine Wellenlänge von 450 nm auf, so identifiziert man eine Mischungslücke, wenn die Zunahme der Transmission sprungartig verläuft. Der sprunghafte Anstieg der Transmission kann durch die sprunghafte Abnahme der Dichte der Mischung erklärt werden, wenn eine Entmischung auftritt. Mit Hilfe eines derartigen Experiments kann der Fachmann die geeignete Temperatur der thermisch induzierten radikalischen Polymerisation auswählen.

Ein weiterer Gegenstand der Erfindung ist daher ein Verfahren zur Herstellung des vernetzten Copolymers, wie zuvor beschrieben, dadurch gekennzeichnet, dass die erfindungsgemäße Zusammensetzung, wie zuvor beschrieben enthaltend oder bestehend aus den beschriebenen oder als bevorzugt beschriebenen Komponenten, bereitgestellt wird und anschließend radikalisch polymerisiert wird, wobei die zu wählende Temperatur der Polymerisation bei Verwendung eines thermischen Radikalinitiators nicht innerhalb einer Mischungslücke der Materialen der bereitgestellten Zusammensetzung liegt.

Die Polymerisation, wie zuvor beschrieben, erfolgt bevorzugt in Substanz.

Die Eigenschaften des erfindungsgemäßen Copolymers als Rohstoff zur Herstellung von ophthalmologischen Produkten können nach Standardverfahren bestimmt werden, wie beispielsweise unter Anwendung der Refraktometrie mit und ohne Bestrahlung. Glistening und Wasseraufnahme wird derart bestimmt, dass bei einer bestimmten Tempertur und einer bestimmten Zeit die Probe inkubiert wird, ein Multifokusbild erzeugt wird und die Vakuolen auf diesem Bild ausgezählt werden. Die Vakuolenzahl wird normiert auf das Volumen angegeben. Die Wasseraufnahme kann beispielsweise aus der Massendifferenz vor und nach Inkubation in Wasser bestimmt werden. Techniken zur Bestimmung der Materialeigenschaft von Polymeren sind im Stand der Technik bekannt und sind in keiner Weise eingeschränkt. Die verwendeten Methoden zur Charakterisierung der erfindungsgemäßen vernetzten Copolymere werden im Ausführungsteil noch detaillierter beschrieben, sind jedoch nicht als einschränkend zu betrachten.

Ein weiterer Gegenstand der Erfindung ist ebenfalls die Verwendung der Zusammensetzung, wie zuvor beschrieben oder als bevorzugt beschrieben, oder die Verwendung des vernetzten Copolymers resultierend aus der polymerisierten Zusammensetzung, wie zuvor beschrieben oder als bevorzugt beschrieben, zur Herstellung eines Rohlings für ein opthalmologisches Produkt, vorzugsweise für eine ophthalmische Linse oder ein ophthalmologisches Implantat, besonders bevorzugt für eine Intraokularlinse.

Der Begriff Rohling kann synonym auch mit dem Begriff Halbzeug verwendet werden und beschreibt Produkte, die in ihrer Grundform soweit aus einem Rohmaterial oder aus Rohmaterialien hergestellt sind, so dass sich die notwendigen Arbeitsschritte zur Fertigung des Endprodukts erheblich verringern. In der Regel sind Rohlinge auf ein bestimmtes Maß vorgefertigt, sind geometrisch bestimmte, feste Körper und entsprechen bestimmten Normen und Zertifizierungsmaßnahmen. Der aus der Metallindustrie bekannte Begriff Halbzeug, entstanden aus "Halb-Fertigstellung", umfasst nicht nur Produkte aus Metallen oder Metalllegierungen, sondern auch aus Kunststoff und gilt entsprechend auch für die Fertigung von Medizinprodukten, umfassend auch ophthalmologische Produkte.

Ein weiterer Gegenstand der Erfindung ist demzufolge ein Artikel enthaltend das erfindungsgemäße Copolymer oder die polymerisierte erfindungsgemäße Zusammensetzung, wie zuvor beschrieben oder als bevorzugt beschrieben.

Der Artikel ist in keiner Weise eingeschränkt und ist bevorzugt ein Rohling oder das fertiggestellte ophthalmologische Produkt, vorzugsweise eine ophthalmische Linse oder ein ophthalmologisches Implantat, besonders bevorzugt eine Intraokularlinse oder eine Phake Intraokularlinse.

Ein weiterer Gegenstand der Erfindung ist demzufolge der Artikel wie zuvor beschrieben, ausgewählt aus einem Rohling für eine ophthalmische Linse oder ein ophthalmologisches Implantat, einem ophthalmologischen Implantat, oder einer ophthalmischen Linse.

Das erfindungsgemäße Copolymer oder die polymerisierte erfindungsgemäße Zusammensetzung, wie zuvor beschrieben, kann ohne Einschränkung für jede Art von ophthalmischen Linsen, bevorzugt Intraokularlinsen oder Phake Linsen, verwendet werden, sowohl für die Haptik als auch für die zentrale optische Linse. Das erfindungsgemäße Material kann auch mit weiteren Materialien kombiniert werden, die zur Herstellung von ophthalmischen Linsen bekannt sind. Dies wäre beispielsweise der Fall, wenn die Haptik aus einem anderen Kunststoff bestehen soll, als die zentrale optische Linse. Der Fachmann auf dem Gebiet der Herstellung von Intraokularlinsen kennt die notwendigen Verarbeitungsschritte zur Herstellung des Rohlings und des Fertigprodukts.

Die radikalische Polymerisation der erfindungsgemäßen Zusammensetzung, wie zuvor beschrieben oder als bevorzugt beschrieben kann beispielsweise in einer Polymerisationsform durchgeführt werden. Es sind vielfältige Materialien, Formen und Techniken diesbezüglich bekannt. Ein entsprechendes Beispiel ist im Ausführungsteil beschrieben.

Ein weiterer Gegenstand der Erfindung ist daher ein Verfahren zur Herstellung eines Artikels, wie zuvor beschrieben oder als bevorzugt beschrieben, dadurch gekennzeichnet, dass eine erfindungsgemäße Zusammensetzung, wie zuvor beschrieben, bereitgestellt wird, eine Polymerisation durchgeführt wird und dabei oder anschließend ein Artikel geformt wird. Der Artikel kann beispielsweise durch Formguß (molding) als Rohling hergestellt werden, den man weiter in das Fertigprodukt, beispielsweise die ophthalmische Linse, wie zuvor beschrieben, umwandelt. Die weiteren Fertigungsschritte durch spahnabhebende Verfahren sind dem Fachmann hinlänglich bekannt.

Auch ohne weitere Ausführungen wird davon ausgegangen, dass ein Fachmann die obige Beschreibung im weitesten Umfang nutzen kann. Die bevorzugten Ausführungsformen sind deswegen lediglich als beschreibende Offenbarung aufzufassen, die keineswegs in irgendeiner Weise limitierend ist.
Vor- und nachstehend sind alle Temperaturen in °C angegeben.
Die Erfindung wird durch die folgenden Beispiele näher erläutert, ohne jedoch hierauf beschränkt zu sein.

### Beispiele

### Beispiel 1 - Herstellung der Verbindungen A, B, C und D:

Verbindung A, entsprechend (M-23), 12-((2-oxo-3-(4-pentyl-2-(trifluoromethyl)phenyl)-2H-chromen-7-yl)oxy)dodecyl acrylat:

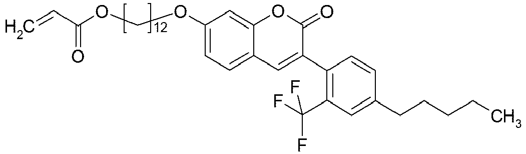

Verbindung B, entsprechend (M-20), 12-((2-oxo-3-(4-pentyl-2-(trifluoromethoxy)phenyl)-2H-chromen-7-yl)oxy)dodecyl acrylat:

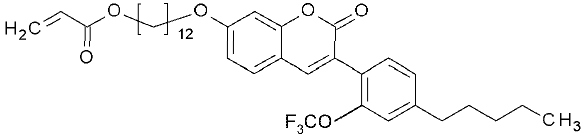

Verbindung C, entsprechend (M-42), 12-((2-oxo-3-(4-pentyl-2-(trifluoromethoxy)phenyl)-2H-chromen-7-yl)oxy)dodecyl methacrylat:

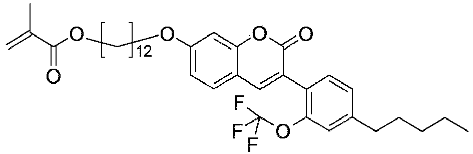

Verbindung D, entsprechend (M-33), 11-(2-oxo-3-(4-pentyl-2-(trifluoromethoxy)phenyl)-2H-chromen-7-yl)undecyl acrylat:

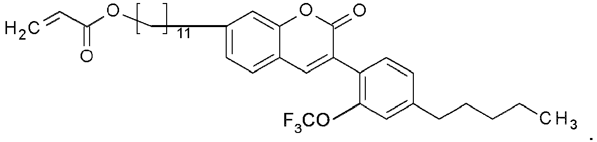

Die Herstellung der zuvor genannten Verbindungen A ist in folgendem Schema 1 dargestellt:

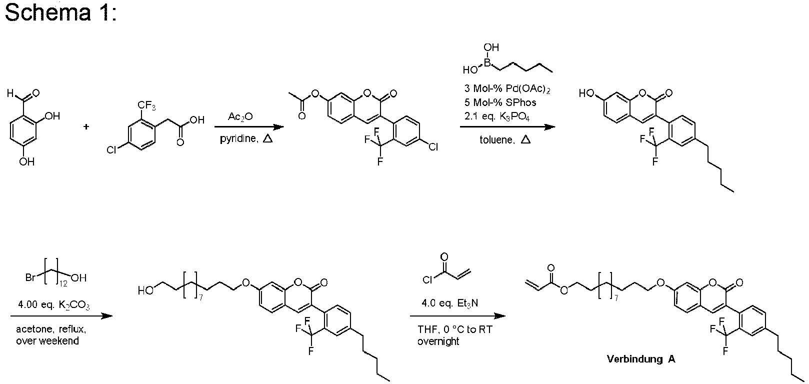

Die Herstellung der zuvor genannten Verbindungen B oder C ist in folgendem Schema 2 dargestellt:

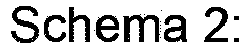

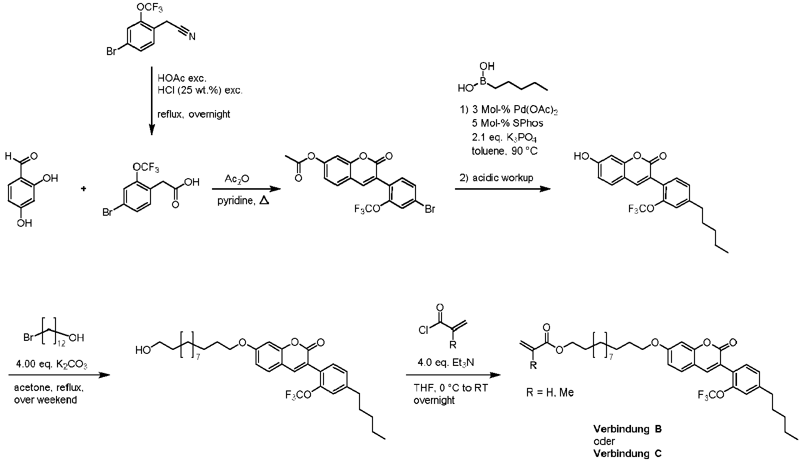

Die Herstellung der zuvor genannten Verbindung D ist in folgendem Schema 3 dargestellt.

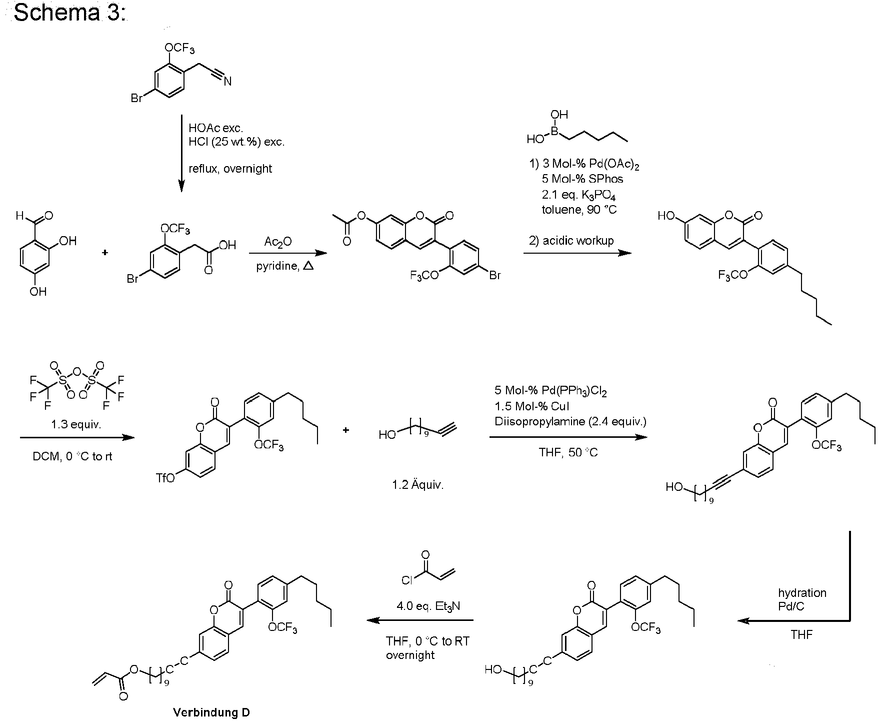

### Beispiel 2: Polymerisation

Die eingesetzten Monomere, wie in der folgenden Tabelle 1 erkenntlich, wurden käuflich erworben und ohne weitere Aufreinigung eingesetzt.

### Allgmeine Vorgehensweise:

In einem Kolben wird eine entsprechende erfindungsgemäße Zusammensetzung, wie in Tabelle 1 beschrieben, durch Mischung der Einzelkomponenten hergestellt und entgast.

Die Polymerisation erfolgt in Substanz. Die Polymerisationsform besteht im Inneren aus einer Silikonmatte geeigneter Dicke, beispielsweise einer Dicke zwischen 1 bis 3 mm, aus der die Form des Probenkörpers, beispielsweise eines Riegels von 1 mm x 25 mm x 30 -70 mm, oder des entsprechend gewünschten Rohlings, sowie ein Einfüllkanal ausgeschnitten sind, sowie zwei Glasplatten, zwischen die die Silikonmatte gelegt wird. Zwischen Glasplatte und Silikonmatte wird jeweils eine Trennschicht eingelegt, beispielsweise eine PET-Folie. Die Polymerisationsbedingungen werden abhängig vom Initiator gewählt, welche sich für Fachpersonal aus der jeweiligen Mischungszusammensetzung erschließen. Die Menge des Initiators ist ebenfalls in Tabelle 1 angegeben. Die Polymerisationstemperatur liegt zwischen 70°C und 180°C.
C18MA = Octadecylmethacrylat
HEMA = 2Hydroxyethylmethacrylat
EGDMA = Ethylenglycoldimethacrylat
UV-Abs = 2-[3-(2H-Benzotriazol-2-yl)-4-hydroxyphenyl]ethylmethacrylat
DtCyP = 1,1-Bis(*tert*-butylperoxy)-3,3,5-trimethylcyclohexan

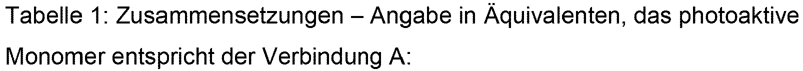

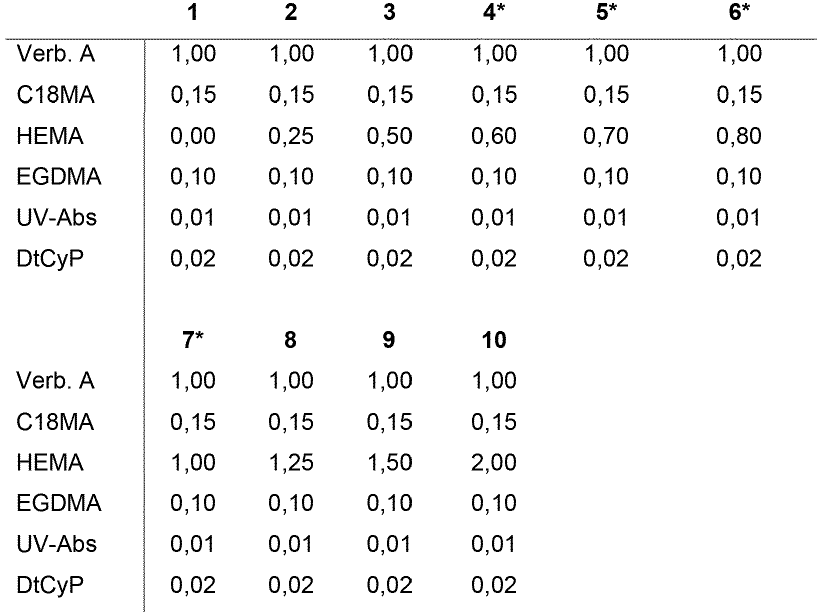

Die erfindungsgemäßen Zusammensetzungen sind mit einem * gekennzeichnet.

Die Materialien aus der Polymerisation der Zusammensetzungen 1 bis 10 der Tabelle 1 werden mit den folgenden Methoden charakterisiert:

### Refraktometrie

Der Brechungsindex n_{D} wird mittels eines Mehrwellenrefraktometers der Firma Schmidt-Haensch des Typs ATR-Lambda bestimmt. Die Messungen werden bei 20 °C durchgeführt.

### Bestrahlung und Brechungsindexänderung

Eine Probe wird mit einem Borsilicatglas abgedeckt und mittels einer 125 W Hg-Hochdrucklampe bestrahlt. Zwischen den Messungen wird der Brechungsindex bestimmt. Es wird so lange bestrahlt, bis keine Brechungsindexänderung mehr zu beobachten ist. Die Differenz des Ausgangsbrechungsindex und des Brechungsindex nach der Bestrahlung wird als Δn_{D} bezeichnet.

### Glistening (GT) und Wasseraufnahme (WA)

Eine 1 mm dicke Probe, beispielsweise eine Scheibe mit einem Durchmesser von 9,5 mm und einer Stärke von 1mm, wird 24 h bei 45 °C in Wasser inkubiert. Anschließend wird die Probe weitere 2,5 h in 37 °C warmem Wasser inkubiert. Die so behandelten Proben werden mikroskopisch untersucht. Hierfür wird im Dunkelfeld mit einem Mikroskop (M205 FA, Leica), das mit einer Kamera (DMC 4500, Leica) ausgestattet ist, eine Bilder-Serie mit verschiedenen Fokusebenen aufgenommen. Dieses wird zu einem Multifokusbild zusammengefügt und die Vakuolen auf diesem Bild ausgezählt. Die Vakuolenzahl ist normiert auf das Volumen angegeben.

Die Wasseraufnahme wird aus der Massendifferenz vor und nach 72-stündiger Inkubation in Wasser bei 45 °C oder 30°C bestimmt.

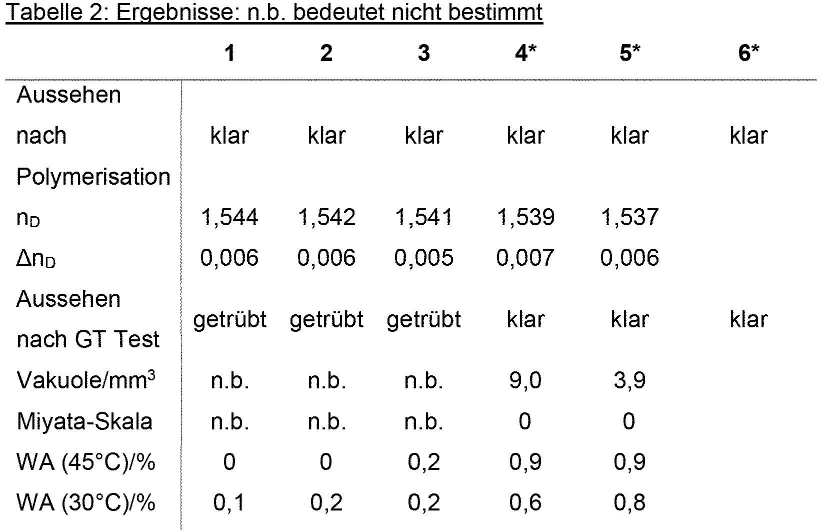

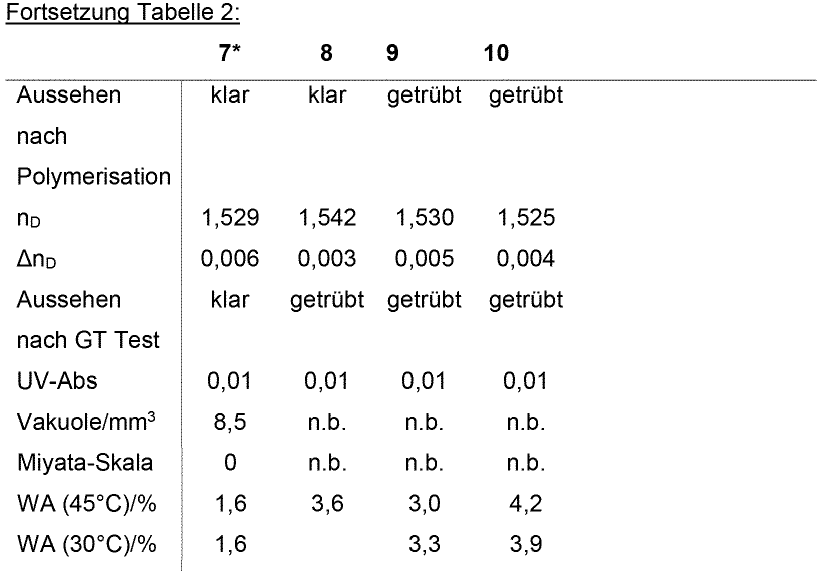

Die Ergebnisse der polymerisierten Zusammensetzungen 1 bis 10 zeigen deutlich, dass aufgrund der Zugabe der hydrophilen Komponente HEMA immer noch gute Brechungsindexänderungen erzielt werden, es jedoch bei erfindungsgemäßer Auswahl der Menge an HEMA keine Trübung beim Glistening-Test auftritt. Das Polymer der polymerisierten Zusammensetzungen 4, 5, 6, 7 ist nach der Polymerisation noch klar, weiterhin zeigt es nach dem Glistening keine Trübung, d.h. es ist kaum Glistening erkennbar und die Vakuolenzahl entspricht dem Grad 0 der Skala, eingeführt von Miyata.

Die erfindungsgemäßen polymerisierten Zusammensetzungen 4 bis 7 sind ideal. Betrachtet man alle Materialeigenschaften zusammen, so ist die polymerisierte Zusammensetzung 5 besonders bevorzugt.

### Beispiel 3:

Analog zu Beispiel 2 werden folgende Zusammensetzungen polymerisiert und entsprechend nach Beispiel 2 vermessen:

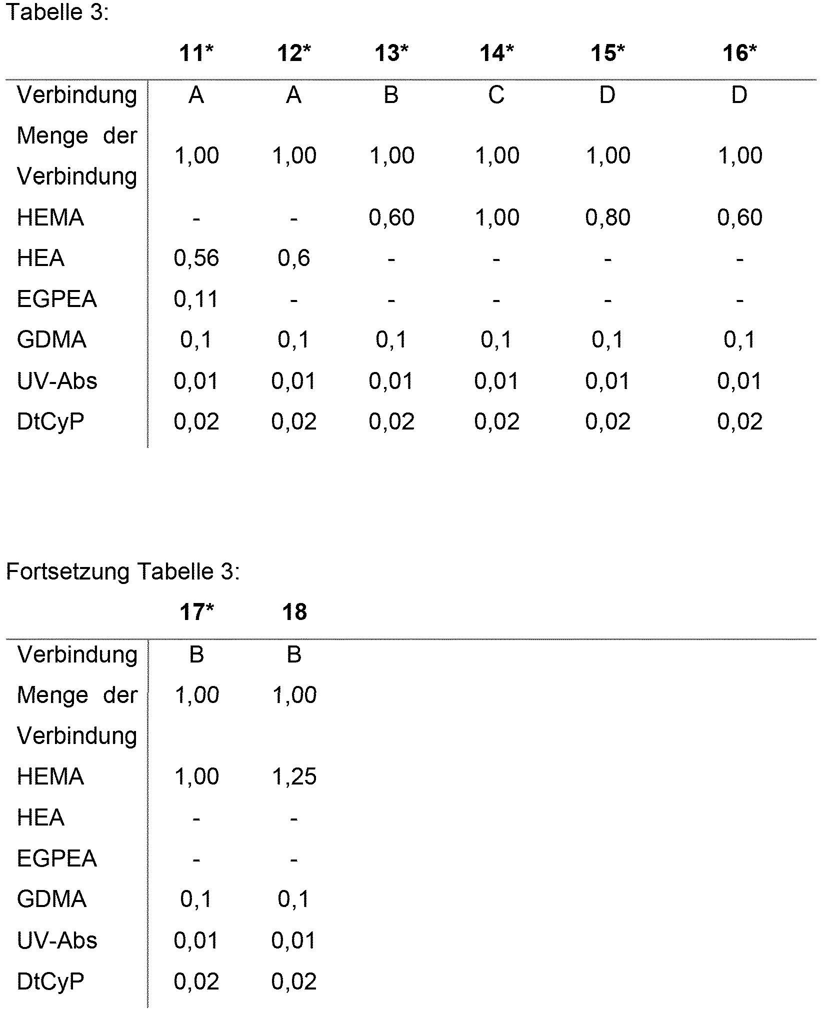

Die Ergebnisse sind in Tabelle 4 angezeigt:

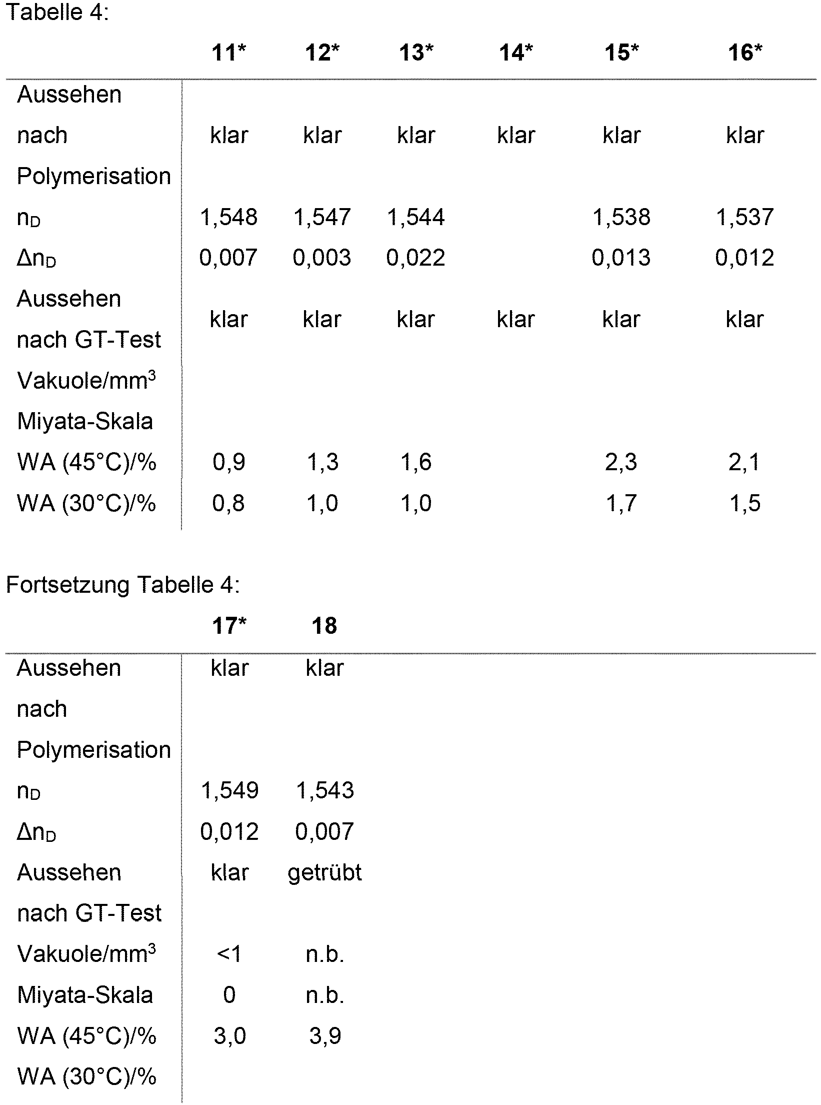

Die Ergebnisse der polymerisierten Zusammensetzungen 11 bis 17 zeigen deutlich, dass aufgrund der Zugabe der hydrophilen Komponente immer noch gute Brechungsindexänderungen erzielt werden, es jedoch bei erfindungsgemäßer Auswahl der Menge an hydrophiler Komponente keine Trübung beim Glistening-Test auftritt.

## Patentansprüche

1. Zusammensetzung enthaltend mindestens eine Verbindung der Formel (1) 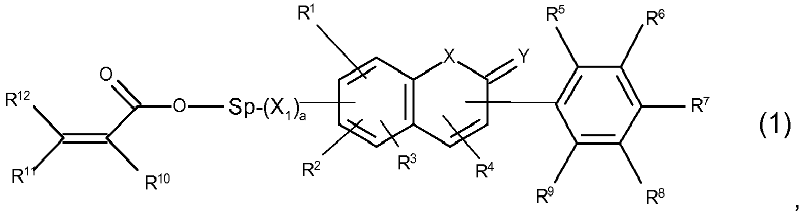 wobei für die verwendeten Symbole und Indizes gilt:
X ist bei jedem Auftreten gleich oder verschieden O, S oder NR⁰;
Y ist bei jedem Auftreten gleich oder verschieden O oder S;
X₁ ist O oder S;
a ist 0 oder 1;
Sp ist ein Alkandiyl, Alkendiyl oder ein Alkindiyl, das mit einem oder mehreren Gruppen R substituiert sein kann;
R⁰ ist eine geradkettige oder verzweigte Alkylgruppe mit 1 bis 10 C-Atomen;
R¹, R², R³ und R⁴ sind jeweils unabhängig voneinander bei jedem Auftreten H, F, Cl, Br, I, eine geradkettige oder verzweigte Alkylgruppe mit 1 bis 20 C-Atomen, eine teilweise oder vollständig halogenierte geradkettige oder verzweige Alkylgruppe mit 1 bis 20 C-Atomen oder eine Aryl- oder Heteroarylgruppe mit 5 bis 40 Ringatomen;
R⁵, R⁶, R⁷, R⁸ und R⁹ sind jeweils unabhängig voneinander bei jedem Auftreten H, F, Cl, Br, I, eine geradkettige oder verzweigte Alkylgruppe mit 1 bis 20 C-Atomen, eine geradkettige oder verzweigte Alkoxygruppe mit 1 bis 20 C-Atomen, eine teilweise oder vollständig halogenierte geradkettige oder verzweige Alkylgruppe mit 1 bis 20 C-Atomen, eine teilweise oder vollständig halogenierte geradkettige oder verzweige Alkoxygruppe mit 1 bis 20 C-Atomen oder eine Aryl- oder Heteroarylgruppe mit 5 bis 40 Ringatomen, wobei mindestens ein Rest aus der Gruppe der Substituenten R⁵ bis R⁹ eine geradkettige oder verzweigte Alkylgruppe mit 1 bis 20 C-Atomen bedeutet, die teilweise oder vollständig halogeniert sein kann;
R¹⁰, R¹¹, R¹² sind jeweils unabhängig voneinander bei jedem Auftreten H, F, eine lineare oder verzweigte Alkylgruppe mit 1 bis 20 C-Atomen, die teilweise oder vollständig halogeniert sein kann, oder eine Arylgruppe mit 6 bis 14 C-Atomen;
R ist bei jedem Auftreten gleich oder verschieden ausgewählt aus der Gruppe bestehend aus einer geradkettigen oder verzweigten Alkylgruppe mit 1 bis 10 C-Atomen, einer teilhalogenierten oder vollständig halogenierten geradkettigen oder verzweigten Alkylgruppe mit 1 bis 10 C-Atomen, einer geradkettigen oder verzweigten Alkoxygruppe mit 1 bis 10 C-Atomen oder einer teilhalogenierten oder vollständig halogenierten geradkettigen oder verzweigten Alkoxygruppe mit 1 bis 10 C-Atomen;
mindestens ein hydrophiles Monomer, dessen unvernetztes Homopolymer wasserlöslich oder in Wasser quellbar ist;
mindestens einen UV-Absorber und mindestens einen Quervernetzer, wobei das molare Verhältnis der Summe aller Verbindungen der Formel (1) zur Summe aller hydrophilen Monomere 1:0,51 bis 1:1,24 ist.

2. Zusammensetzung nach Anspruch 1, **dadurch gekennzeichnet, dass** sie
mindestens ein weiteres nicht hydrophiles Monomer, welches nicht der Formel (1) entspricht und/oder einen Blauabsorber enthält.

3. Zusammensetzung nach Anspruch 1 oder 2, **dadurch gekennzeichnet, dass**
1 molares Äquivalent einer Verbindung der Formel (1) oder 1 molares Äquivalent der Summe aller Verbindungen der Formel (1);
0,51 bis 1,24 molare Äquivalente der hydrophilen Monomere;
0 bis 0,2 molare Äquivalente der nicht hydrophilen Monomere, welche nicht der Formel (1) entsprechen;
0,05 bis 0,5 molare Äquivalente des oder der Quervernetzer(s) und
0,005 bis 0,05 molare Äquivalente des oder der UV-Absorber(s) enthalten sind.

4. Zusammensetzung nach einem oder mehreren der Ansprüche 1 bis 3, **dadurch gekennzeichnet, dass** die Zusammensetzung einen Radikalinitiator enthält.

5. Zusammensetzung nach einem oder mehreren der Ansprüche 1 bis 4, **dadurch gekennzeichnet, dass** die Zusammensetzung aus einem molaren Äquivalent einer Verbindung der Formel (1) oder einem molaren Äquivalent der Summe aller Verbindungen der Formel (1);
0,51 bis 1,24 molaren Äquivalenten der hydrophilen Monomere;
0 bis 0,2 molaren Äquivalenten der nicht hydrophilen Monomere, welche nicht der Formel (1) entsprechen;
0,05 bis 0,5 molaren Äquivalenten des oder der Quervernetzer(s);
0,005 bis 0,05 molaren Äquivalenten des oder der UV-Absorber(s);
0 bis 0,004 molaren Äquivalenten des oder der Blauabsorber(s) und
0,005 bis 0,05 molaren Äquivalenten eines Radikalinitators besteht.

6. Zusammensetzung nach einem oder mehreren der Ansprüche 1 bis 5, **dadurch gekennzeichnet, dass** das mindestens eine hydrophile Monomer aus 3-Hyroxypropylmetacrylat, 3-Hydroxypropylacrylat, 2-Hydroxyethylmethacrylat, 2-Hydroxyethylacrylat, 4-Hydroxybutylmethacrylat, 4-Hydroxybutylacrylat, Glycerylmethacrylat, Glycerylacrylat, Acrylamid, N-Vinylpyrrolidon, 6-Hydroxyhexylmethacrylat, 6-Hydroxyhexylacrylat, 18-Hydroxyoctadecylmethacrylat, 18-Hydroxyoctadecylacrylat, 11-Hydroxyundecylmethacrylat, 11-Hydroxyundecylacrylat, 12-Hydroxydodecylmethacrylat, 12-Hydroxydodecylacrylat, Ethylenglycolphenyletheracrylat, Ethylenglycolphenylethermethacrylat oder einer Kombination dieser Verbindungen ausgewählt wird.

7. Zusammensetzung nach einem oder mehreren der Ansprüche 1 bis 6, **dadurch gekennzeichnet, dass** der Quervernetzter aus Para-Divinylbenzol, Allylacrylat, Ethyleneglycol-Divinylether, Divinylsulfon, Allylmethacrylat, N,N'-Methylen-bis-Acrylamid, Ethylenglycoldiacrylat, N,N'-Methylen-bis-Methacrylamid, 1,3-Propandioldiacrylat, 2,3-Propandioldiacrylat, 1,4-Butandioldiacrylat, 1,3-Butandioldiacrylat, Ethylenglycoldimethacrylat, N,N'-Dihydroxyethylenbisacrylamid, Thiodiethylenglycoldiacrylat, 1,3-Propandioldimethacrylat, Neopentylglycoldiacrylat, 2,3-Propandioldimethacrylat, Di(ethylenglycol)diacrylat, N,N'-Hexamethylenbisacrylamid, 1,3-Butandioldimethacrylat, 1,6-Hexandioldiacrylat, 1,4-Butandioldimethacrylat, Thiodiethylenglycoldiacrylat, Thiodiethylenglycoldimethacrylat, Neopentylglycoldimethacrylat, Diethylenglycoldimethacrylat, Diallylphthalat, Triallylcyanurat, Glyceryl-1,3-dimethacrylat, N,N'-Hexamethylenbismethacrylamid, 1,6-Hexandioldimethacrylat, Tri(ethyleneglycol)diacrylat, Triethyleneglycoldimethacrylat, Tetra(ethylenglycol)diacrylat, Tetra(ethyleneglycol)dimethacrylat, Poly(ethylenglycol)dimethacrylat, Poly(ethylenglycol)diacrylat oder einer Kombination dieser Verbindungen ausgewählt wird.

8. Zusammensetzung nach einem oder mehreren der Ansprüche 1 bis 7, **dadurch gekennzeichnet, dass** der UV-Absorber aus 2-(2-Hydroxy-5-vinylphenyl)-2H-benzotriazol, Allyl-2-hydroxybenzophenon, 2-Allyl-6-(2H-benzotriazol-2-yl)-*p*-cresol, 4-Methacryloxy-2-hydroxybenzophenon, 2-(2'-Hydroxy-3'-methallyl-5'-methylphenyl)benzotriazol, 2-Hydroxy-4-methacryloyloxybenzophenon, 4-Acryloylethoxy-2-hydroxybenzophenon, 2-[3-(2H-Benzotriazol-2-yl)-4-hydroxyphenyl]ethylmethacrylat, 2-(2'-Hydroxy-5'-methacrylamidophenyl)-5-methoxybenzotriazol, 2-(2'-Hydroxy-5'-methacrylamidophenyl)-5-chlorobenzotriazol, 2-(2'-Hydroxy-5'-methacryloxypropylphenyl)benzotriazol, 2-(2'-Hydroxy-5'-methacryloylpropyl-3'-tert-butyl-phenyl)-5-methoxy-2H-benzotriazol, 2-(3-(tert-butyl)-4-hydroxy-5-(5-methoxy-2H-benzo[d][1,2,3]triazol-2-yl)phenoxy)ethyl methacrylat, 2-[3'-tert-butyl-2'-hydroxy-5'-(3'-methacryloyloxypropyl)phenyl]-5-chlorbenzotriazol, 2-{2'-Hydroxy-3'-tert-butyl-5'-[3'-methacryloyloxypropoxy]phenyl}-5-methoxy-2H-benzotriazol und 2-[3'tert-Butyl-5'-(3"-dimethylvinylsilylpropoxy)-2'-hydroxyphenyl]-5-methoxybenzotriazol oder einer Kombination dieser Verbindungen ausgewählt wird.

9. Vernetztes Copolymer enthaltend eine polymerisierte Zusammensetzung nach einem oder mehreren der Ansprüche 1 bis 8.

10. Verfahren zur Herstellung eines Copolymers nach Anspruch 9, **dadurch gekennzeichnet, dass** eine Zusammensetzung nach einem oder mehreren der Ansprüche 1 bis 8 bereitgestellt wird und anschließend radikalisch polymerisiert wird, wobei die zu wählende Temperatur der Polymerisation bei Verwendung eines thermischen Radikalinitiators nicht innerhalb einer Mischungslücke der Materialien liegt.

11. Verwendung einer Zusammensetzung nach einem oder mehreren der Ansprüche 1 bis 8 oder ein Copolymer nach Anspruch 9 zur Herstellung eines Rohlings für eine ophthalmische Linse oder ein ophthalmologisches Implantat.

12. Verwendung nach Anspruch 11 zur Herstellung einer Intraokularlinse.

13. Artikel enthaltend ein Copolymer nach Anspruch 9.

14. Artikel nach Anspruch 13, ausgewählt aus einem Rohling für eine ophthalmische Linse oder ein ophthalmologisches Implantat, einem ophthalmologischem Implantat oder einer opththalmischen Linse, bevorzugt eine Intraokularlinse oder eine Phake Linse.

15. Verfahren zur Herstellung eines Artikels nach Anspruch 13, **dadurch gekennzeichnet, dass** eine Zusammensetzung nach einem oder mehreren der Ansprüche 1 bis 8 bereitgestellt wird, eine Polymerisation durchgeführt wird und dabei oder anschließend der Artikel, vorzugsweise durch Formguß, geformt wird.
